(19) Europäisches Patentamt / European Patent Office / Office européen des brevets

(11) **EP 4 379 336 B1**

(12) **EUROPEAN PATENT SPECIFICATION**

(45) Date of publication and mention
of the grant of the patent:
**28.01.2026  Bulletin 2026/05**

(21) Application number: **22848394.7**

(22) Date of filing: **21.07.2022**

(51) International Patent Classification (IPC):
**G01K 15/00** *(2006.01)*    **G01K 3/10** *(2006.01)*

(52) Cooperative Patent Classification (CPC):
**G01K 15/005; G01K 3/10; G01K 7/42;
G01K 15/007**

(86) International application number:
**PCT/CN2022/107015**

(87) International publication number:
**WO 2023/005789 (02.02.2023 Gazette 2023/05)**

(54) **TEMPERATURE TREATMENT METHOD AND APPARATUS**

VERFAHREN UND VORRICHTUNG ZUR TEMPERATURBEHANDLUNG

PROCÉDÉ ET APPAREIL DE TRAITEMENT DE TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.07.2021  CN 202110851897**

(43) Date of publication of application:
**05.06.2024  Bulletin 2024/23**

(73) Proprietor: **Jilin Zhong Ying High Technology Co.,
Ltd.
Jilin 130000 (CN)**

(72) Inventor: **WANG, Chao
Changchun, Jilin 130000 (CN)**

(74) Representative: **Boult Wade Tennant LLP
Salisbury Square House
8 Salisbury Square
London EC4Y 8AP (GB)**

(56) References cited:
**CN-A- 107 702 823     CN-A- 109 186 813
CN-A- 109 387 303     CN-A- 109 696 257
CN-A- 111 007 329     CN-A- 113 588 132
US-A1- 2013 124 127     US-A1- 2020 232 854**

**Description**

TECHNICAL FIELD

The present disclosure relates to the technical field of data processing, and particularly to a temperature processing method and apparatus.

BACKGROUND

At present, as an information source for a temperature detection system of an electric vehicle, a temperature sensor is an essential component of the temperature detection system of the electric vehicle.

In the prior art, the temperature detection system of the electric vehicle usually is configured with a thermocouple temperature sensor for temperature collection. The actual process of temperature collection is easily influenced by some interference factors, such as system lines and loads or external electromagnetic radiations.

SUMMARY

The above interference factors will lead to the deviation of temperature measurement results and reduce the accuracy of temperature collection. In order to reduce the influences of the above interference factors on temperature collection, a filter may be added to a circuit or an appropriate filtering algorithm may be added to a system to filter a returned temperature value. However, if the temperature value returned by a temperature sensor changes at a certain moment due to external influences and an error always remains unchanged, the error cannot be found and corrected by the filter or the filtering algorithm such that the temperature value is always wrong, which may lead to other failures of the electric vehicle. CN 109 186 813 A discloses a temperature sensor self-checking device and method, which can perform a fast self-test on the temperature sensor and its measurement chain.

Aiming at the problem of the inaccurate temperature collection in the prior art, the embodiments of the present disclosure provide a temperature processing method and apparatus, which may at least partially solve the problem in the prior art.

According to a first aspect of the invention, there is provided a temperature processing method in accordance with claim 1.

In another aspect, the present disclosure provides a temperature processing apparatus in accordance with claim 7.

In still another aspect, the present disclosure provides an electronic device, including a memory, a processor and a computer program stored in the memory and executable on the processor, and when executing the computer program, the processor implements the steps of the method according to any of the aforementioned embodiments.

In yet another aspect, the present disclosure provides a computer-readable storage medium which stores a computer program, and when executed by a processor, the computer program implements the steps of the method according to any of the aforementioned embodiments.

The temperature processing method and apparatus according to the embodiments of the present disclosure acquire a current frame temperature value of each channel; calculate an absolute value of a difference between the current frame temperature value and a previous frame temperature value of each channel to obtain a current frame temperature variation of each channel; determine each first effective channel based on a first threshold and the current frame temperature variation of each channel; determine each second effective channel based on multi-frame temperature values of each first effective channel; and obtain a current frame output temperature value based on the current frame temperature value of each second effective channel, thereby improving the accuracy of temperature collection.

BRIEF DESCRIPTION OF THE DRAWINGS

In order to more clearly illustrate the technical solutions in the embodiments of the present disclosure or in the prior art, the drawings to be used in the description of the embodiments or the prior art will be briefly introduced as follows. Obviously, the drawings used in the following description only illustrate some embodiments of the present disclosure, and those of ordinary skill in the art may obtain other drawings from them without paying any creative effort. In the drawings:

FIG. 1 illustrates a flowchart of a temperature processing method according to a first embodiment of the present disclosure.
FIG. 2 illustrates a flowchart of a temperature processing method according to a second embodiment of the present disclosure.
FIG. 3 illustrates a flowchart of a temperature processing method according to a third embodiment of the present disclosure.

FIG. 4 illustrates a flowchart of a temperature processing method according to a fourth embodiment of the present disclosure.

FIG. 5 illustrates a flowchart of a temperature processing method according to a fifth embodiment of the present disclosure.

FIG. 6 illustrates a flowchart of a temperature processing method according to a sixth embodiment of the present disclosure.

FIG. 7 illustrates a flowchart of a temperature processing method according to a seventh embodiment of the present disclosure.

FIG. 8 illustrates a structural diagram of a temperature processing apparatus according to an eighth embodiment of the present disclosure.

FIG. 9 illustrates a structural diagram of a temperature processing apparatus according to a ninth embodiment of the present disclosure.

FIG. 10 illustrates a structural diagram of a temperature processing apparatus according to a tenth embodiment of the present disclosure.

FIG. 11 illustrates a structural diagram of a temperature processing apparatus according to an eleventh embodiment of the present disclosure.

FIG. 12 illustrates a structural diagram of a temperature processing apparatus according to a twelfth embodiment of the present disclosure.

FIG. 13 illustrates a structural diagram of a temperature processing apparatus according to a thirteenth embodiment of the present disclosure.

FIG. 14 illustrates a structural diagram of a temperature processing apparatus according to a fourteenth embodiment of the present disclosure.

FIG. 15 illustrates a structural diagram of a temperature processing apparatus according to a fifteenth embodiment of the present disclosure.

FIG. 16 illustrates a physical structural diagram of an electronic device according to a sixteenth embodiment of the present disclosure.

DETAILED DESCRIPTION

In order that the objectives, technical solutions and advantages of the embodiments of the present disclosure are clearer, the embodiments of the present disclosure will be further illustrated in detail below with reference to the drawings. Here, the exemplary embodiments of the present disclosure and the description thereof are used to illustrate the present disclosure, but are not intended to limit the present disclosure. It should be noted that the embodiments of the present disclosure and the features in the embodiments may be arbitrarily combined with each other without conflict.

In order to facilitate understanding of the technical solutions of the present disclosure, related contents of the technical solutions of the present disclosure will be illustrated below. In the embodiments of the present disclosure, at least two temperature sensors or at least two filtering algorithms are needed for temperature collection of a target object, and the at least two filtering algorithms correspond to the same one temperature sensor. In the inventor's embodiments, for the convenience of description, one channel corresponds to one temperature sensor or one filtering algorithm. The temperature processing method according to the embodiments of the present disclosure may be configured in a temperature detection system of an electric vehicle, and may also be applied to other scenarios requiring temperature collection, which is not limited herein.

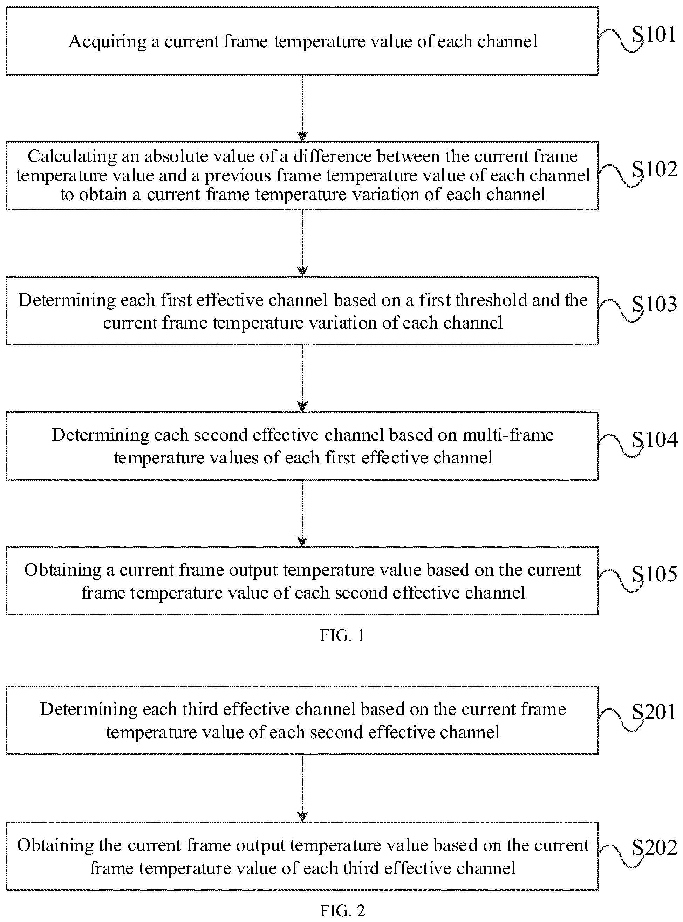

FIG. 1 illustrates a flowchart of a temperature processing method according to a first embodiment of the present disclosure. As illustrated in FIG. 1, the temperature processing method according to the first embodiment of the present disclosure includes:

S101: acquiring a current frame temperature value of each channel.

Specifically, the temperature processing apparatus acquires a current frame temperature value of each channel. If each channel corresponds to one temperature sensor, the temperature sensor corresponding to each channel collects temperature in real time and transmits the obtained temperature value to the temperature processing apparatus, and the temperature processing apparatus takes the received temperature value collected by the temperature sensor in real time as a current frame temperature value of the corresponding channel. If each channel corresponds to one filtering algorithm and different filtering algorithms correspond to the same one temperature sensor, the temperature sensor collects temperature in real time to obtain a temperature collection signal, and the temperature processing apparatus processes the temperature collection signal using different filtering algorithms to obtain a current frame temperature value of each channel. And, the number of the channels is at least two, which is set according to actual needs and is not limited herein. The temperature processing apparatus includes, but is not limited to, a single chip microcomputer, a Digital Signal Processor (DSP), a processor, etc.

S102: calculating an absolute value of a difference between the current frame temperature value and a previous frame temperature value of each channel to obtain a current frame temperature variation of each channel.

Specifically, after obtaining the current frame temperature value of each channel, the temperature processing apparatus calculates an absolute value of a difference between the current frame temperature value and a previous frame temperature value of each channel as a current frame temperature variation of the channel. The temperature processing apparatus obtains the current frame temperature variation of each channel.

S103: determining each first effective channel based on a first threshold and the current frame temperature variation of each channel.

Specifically, the temperature processing apparatus compares the current frame temperature variation of each channel with a first threshold, and judges whether the channel is a first effective channel based on a comparison result, and each first effective channel is uniquely corresponding to one channel. The temperature processing apparatus obtains each first effective channel. In this embodiment, the first threshold is set according to actual needs and is not limited herein.

For example, the temperature processing apparatus compares a current frame temperature variation of channel A with the first threshold, and if the current frame temperature variation of channel A is less than the first threshold, it means that the temperature value obtained from channel A is stable, and channel A may be taken as the first effective channel. The temperature processing apparatus compares a current frame temperature variation of channel B with the first threshold, and if the current frame temperature variation of channel B is greater than or equal to the first threshold, it means that the temperature value obtained from channel B is unstable, and channel B may be reset to obtain a temperature value again.

S104: determining each second effective channel based on multi-frame temperature values of each first effective channel.

Specifically, the temperature processing apparatus acquires multi-frame temperature values of each first effective channel, and determine each second effective channel based thereon.

For example, the temperature processing apparatus obtains a temperature variance of each first effective channel based on a variance of temperature values of a latest preset number of frames of the first effective channel, and determine each second effective channel based on a second threshold and the temperature variance of each first effective channel.

S105: obtaining a current frame output temperature value based on the current frame temperature value of each second effective channel.

Specifically, after obtaining each second effective channel, the temperature processing apparatus obtains a current frame output temperature value based on the current frame temperature value of each second effective channel.

For example, the temperature processing apparatus calculates an average value of the current frame temperature values of all of the respective second effective channels as the current frame output temperature value.

The temperature processing method according to the embodiment of the present disclosure acquires a current frame temperature value of each channel, calculate an absolute value of a difference between the current frame temperature value and a previous frame temperature value of each channel, obtains a current frame temperature variation of each channel, determines each first effective channel based on a first threshold and the current frame temperature variation of each channel, determines each second effective channel based on multi-frame temperature values of each first effective channel, and obtains a current frame output temperature value based on the current frame temperature value of each second effective channel, thereby improving the accuracy of temperature collection.

On the basis of the above embodiments, further, determining each first effective channel based on a first threshold and the current frame temperature variation of each channel includes:
taking the channel as the first effective channel when determining that the current frame temperature variation of the channel is less than the first threshold.

Specifically, the temperature processing apparatus compares the current frame temperature variation of the channel with the first threshold, and if the current frame temperature variation of the channel is less than the first threshold, takes the channel as the first effective channel, and the first effective channel corresponds to the channel. The current frame temperature value of the channel is taken as a current frame temperature value of the corresponding first effective channel, and the temperature sensor or the filtering algorithm corresponding to the channel is taken as a temperature sensor or a filtering algorithm corresponding to the corresponding first effective channel.

On the basis of the above embodiments, further, the temperature processing method according to the embodiment of the present disclosure further includes:
resetting the channel when determining that the current frame temperature variation of the channel is greater than or equal to the first threshold.

Specifically, the temperature processing apparatus compares the current frame temperature variation of the channel with the first threshold, and if the current frame temperature variation of the channel is greater than or equal to the first threshold, it means that the temperature value obtained from the channel is unstable, and the channel may be reset.

For example, if the channel corresponds to one temperature sensor, the temperature sensor corresponding to the channel may be restarted to reset the channel and perform temperature collection again. If the channel corresponds to one filtering algorithm, the corresponding filtering algorithm is reset and filtering is performed again.

On the basis of the above embodiments, further, obtaining a current frame output temperature value based on the current frame temperature value of each second effective channel includes:

calculating an average value of the current frame temperature values of all of the respective second effective channels as the current frame output temperature value.

Specifically, the current frame temperature values of all of the respective second effective channels are all valid, and the temperature processing apparatus calculates an average value of the current frame temperature values of all of the respective second effective channels, and take the calculated average value as the current frame output temperature value.

For example, the temperature processing apparatus calculates a current frame output temperature value $T_{out}$ according to a formula $T_{out} = \dfrac{\sum\limits_{k=1}^{w} T_k}{w}$ , where $T_k$ represents a current frame temperature value of a $k$-th second effective channel, $k$ is a positive integer less than or equal to w, and w represents the number of the second effective channels.

FIG. 2 illustrates a flowchart of a temperature processing method according to a second embodiment of the present disclosure. As illustrated in FIG. 2, on the basis of the above embodiments, further, obtaining a current frame output temperature value based on the current frame temperature value of each second effective channel includes:

S201: determining each third effective channel based on the current frame temperature value of each second effective channel.

Specifically, after determining each second effective channel, the temperature processing apparatus compares the current frame temperature value of each second effective channel with the current frame temperature value of each of the remaining second effective channels, and judges whether the second effective channel is a third effective channel based on a comparison result, and the third effective channel is uniquely corresponding to one second effective channel. The temperature processing apparatus obtains each third effective channel.

S202: obtaining the current frame output temperature value based on the current frame temperature value of each third effective channel.

Specifically, after obtaining each third effective channel, the temperature processing apparatus may obtain a current frame output temperature value based on the current frame temperature value of each third effective channel.

For example, the temperature processing apparatus calculates an average of the current frame temperature values of all of the respective third effective channels as the current frame output temperature value.

On the basis of the above embodiments, further, obtaining the current frame output temperature value based on the current frame temperature value of each third effective channel includes:

calculating an average value of the current frame temperature values of all of the respective third effective channels as the current frame output temperature value.

Specifically, the current frame temperature values of all of the respective third effective channels are all valid, and the temperature processing apparatus may calculate an average value of the current frame temperature values of all of the respective third effective channels, and take the calculated average value as the current frame output temperature value. For example, the temperature processing apparatus calculates a current frame output temperature value $T_{out}$ according to a formula $T_{out} = \dfrac{\sum\limits_{j=1}^{m} T_j}{m}$ , where $T_j$ represents a current frame temperature value of an $j$-th third effective channel, $j$ is a positive integer less than $m$, and $m$ represents the number of the third effective channels.

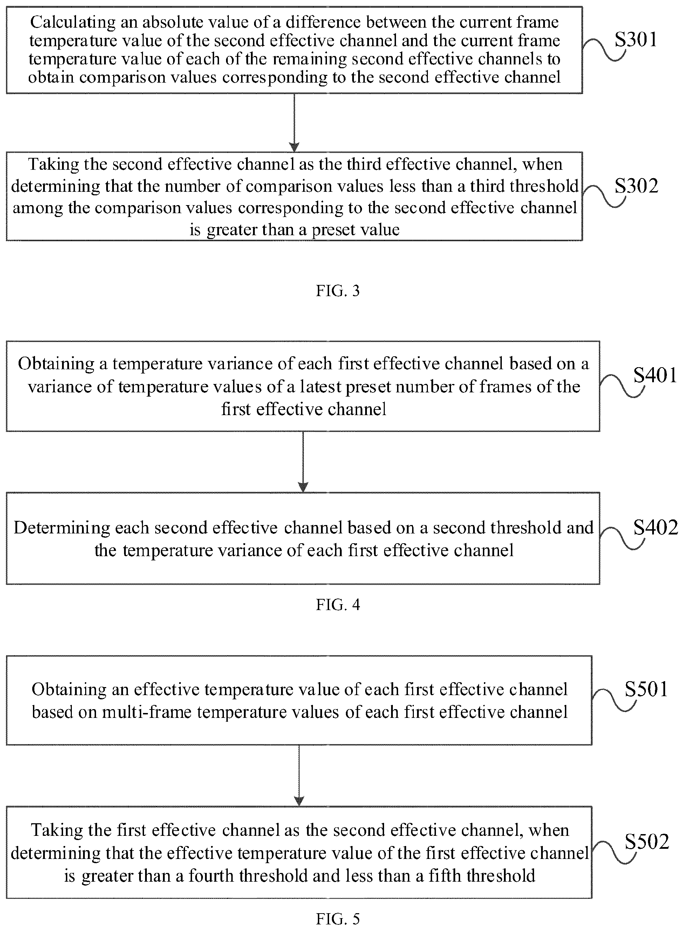

FIG. 3 illustrates a flowchart of a temperature processing method according to a third embodiment of the present disclosure. As illustrated in FIG. 3, on the basis of the above embodiments, further, determining each third effective channel based on the current frame temperature value of each second effective channel includes:

S301: calculating an absolute value of a difference between the current frame temperature value of the second effective channel and the current frame temperature value of each of the remaining second effective channels to obtain a comparison value corresponding to the second effective channel.

Specifically, the temperature processing apparatus calculates an absolute value of a difference between the current frame temperature value of the second effective channel and the current frame temperature value of each of the remaining second effective channels, and obtain comparison values corresponding to the second effective channel. It may be understood that there may be one or more comparison values corresponding to the second effective channel. The temperature processing apparatus obtains comparison values corresponding to all second effective channel.

For example, there are totally three second effective channels: a second effective channel A with a current frame temperature value of a, a second effective channel C with a current frame temperature value of c and a second effective channel D with a current frame temperature value of d. An absolute value of a difference between a and c is calculated as V*ac,* an absolute value of a difference between a and d is calculated as V*ad* , and the comparison values corresponding to the second effective channel A are V*ac* and V*ad.* An absolute value of a difference between c and a is calculated as V*ca,* an absolute value of a difference between c and d is calculated as V*cd,* and the comparison values corresponding to the second effective channel C are V*ca* and V*cd.* An absolute value of a difference between d and a is calculated as V*da,* an absolute value of a difference between d and c is calculated as V*dc,* and the comparison values corresponding to the second effective channel D are V*da* and V*dc.*

S302: taking the second effective channel as the third effective channel, when determining that the number of comparison values less than a third threshold among the comparison values corresponding to the second effective channel is greater than a preset value.

Specifically, each of the comparison values corresponding to the second effective channel is compared with a third threshold, and the number of comparison values less than the third threshold is counted. If the number of comparison values less than the third threshold is greater than a preset value, it means that the current frame temperature value of the second effective channel is valid, and the second effective channel is taken as the third effective channel. Each third effective channel is uniquely corresponding to one second effective channel, and the current frame temperature value of the third effective channel is equal to the current frame temperature value of the corresponding second effective channel. In this embodiment, the third threshold is set according to actual needs and is not limited herein. The preset value is set according to actual needs and is not limited herein.

For example, the preset value is 1. The comparison values corresponding to the second effective channel A are V*ac* and V*ad* , both of which are compared with the third threshold respectively. If V*ac* and V*ad* are both less than the third threshold, the number of comparison values less than the third threshold for the second effective channel A is 2, which is greater than the preset value 1, and then the second effective channel A is taken as the third effective channel. The comparison values corresponding to the second effective channel D are V*da* and V*dc*, both of which are compared with the third threshold respectively. If V*da* is less than the third threshold and V*dc* is greater than the third threshold, the number of comparison values less than the third threshold for the second effective channel D is 1, which is equal to the preset value 1, then the second effective channel D will not be taken as the third effective channel.

On the basis of the above embodiments, further, the temperature processing method according to the embodiment of the present disclosure further includes:
resetting the second effective channel, when determining that the number of comparison values less than the third threshold among the comparison values corresponding to the second effective channel is less than or equal to the preset value.

Specifically, each of the comparison values corresponding to the second effective channel is compared with the third threshold, and the number of comparison values less than the third threshold is counted. If the number of comparison values less than the third threshold is less than or equal to the preset value, it means that the current frame temperature value corresponding to the second effective channel is invalid, and the second effective channel may be reset.

For example, if the second effective channel corresponds to one temperature sensor, the temperature sensor corresponding to the second effective channel may be restarted to reset the second effective channel and perform temperature collection again. If the second effective channel corresponds to one filtering algorithm, the corresponding filtering algorithm is reset and filtering is performed again.

FIG. 4 illustrates a flowchart of a temperature processing method according to a fourth embodiment of the present disclosure. As illustrated in FIG. 4, on the basis of the above embodiments, further, determining each second effective channel based on multi-frame temperature values of each first effective channel includes:
S401: obtaining a temperature variance of each first effective channel based on a variance of temperature values of a latest preset number of frames of each first effective channel.

Specifically, the temperature processing apparatus records the temperature values of the latest preset number of frames of each first effective channel, and then calculates a variance of the temperature values of the latest preset number of frames of each first effective channel to obtain a temperature variance of each first effective channel. In this embodiment, the temperature values of the latest preset number of frames of the first effective channel include the current frame temperature value of the first effective channel. The preset number of is set according to actual needs and is not limited here.

For example, when determining that the channel A is the first effective channel, the temperature processing apparatus acquires the temperature values of the latest 20 frames of the first effective channel A, then calculates a variance of the temperature values of the latest 20 frames of the first effective channel A according to a variance formula, and takes the calculated variance as the temperature variance of the first effective channel A. The variance formula is expressed as follows:

$$\delta = \sqrt{\frac{\sum_{i=1}^{n}(p-t_i)^2}{n}}$$

Where, $\delta$ represents a temperature variance of the first effective channel, $p$ represents an average value of temperature values of the latest $n$ frames of the first effective channel, $t_i$ represents a temperature value of the latest $i$-th frame of the first effective channel, $i$ is a positive integer less than or equal to $n$, and $n$ represents a preset number.

S402: determining each second effective channel based on a second threshold and the temperature variance of each first effective channel.

Specifically, for the temperature variance of each first effective channel, the temperature processing apparatus compares the temperature variance of each first effective channel with a second threshold, and judges whether the first effective channel is the second effective channel based on a comparison result, and the second effective channel is uniquely corresponding to one first effective channel. The temperature processing apparatus obtains each second effective channel. In this embodiment, the second threshold is set according to actual needs and is not limited herein.

For example, the temperature processing apparatus compares a temperature variance of the first effective channel A with the second threshold, and if the temperature variance of the first effective channel A is less than the second threshold, it means that the temperature value obtained from the first effective channel A is stable for a time period, and the first effective channel A could be taken as the second effective channel. The temperature processing apparatus compares a temperature variance of the first effective channel C with the second threshold, and if the temperature variance of the first effective channel C is greater than or equal to the second threshold, it means that the temperature value obtained from the first effective channel C is unstable for a time period, and the first effective channel C may be reset to obtain a temperature value again.

On the basis of the above embodiments, further, determining each second effective channel based on the temperature variance of each first effective channel and a second threshold includes:

taking the first effective channel as the second effective channel when determining that the temperature variance of the first effective channel is less than the second threshold.

Specifically, the temperature processing apparatus compares the temperature variance of the first effective channel with the second threshold, and if the temperature variance of the first effective channel is less than the second threshold, takes the first effective channel as the second effective channel, and the second effective channel corresponds to the first effective channel. The current frame temperature value of the first effective channel is taken as a current frame temperature value of the corresponding second effective channel, and the temperature sensor or the filtering algorithm corresponding to the first effective channel is taken as a temperature sensor or a filtering algorithm corresponding to the corresponding second effective channel.

On the basis of the above embodiments, further, the temperature processing method according to the embodiment of the present disclosure further includes:

resetting the first effective channel when determining that the temperature variance of the first effective channel is greater than or equal to the second threshold.

Specifically, the temperature processing apparatus compares the temperature variance of the first effective channel with the second threshold, and if the temperature variance of the first effective channel is greater than or equal to the second threshold, it means that the temperature value obtained from the first effective channel is unstable for a time period, and the first effective channel may be reset.

For example, if the first effective channel corresponds to one temperature sensor, the temperature sensor corresponding to the first effective channel may be restarted to reset the first effective channel and collect temperature again. If the first effective channel corresponds to one filtering algorithm, the corresponding filtering algorithm is reset and filtering is performed again.

FIG. 5 illustrates a flowchart of a temperature processing method according to a fifth embodiment of the present disclosure. As illustrated in FIG. 5, on the basis of the above embodiments, further, determining each second effective channel based on multi-frame temperature values of each first effective channel includes:

S501: obtaining an effective temperature value of each first effective channel based on multi-frame temperature values of each first effective channel.

Specifically, the temperature processing apparatus acquires temperature values of a plurality of frames of each first effective channel, and obtain an effective temperature value of each first effective channel based thereon.

S502: taking the first effective channel as the second effective channel, when determining that the effective temperature value of the first effective channel is greater than a fourth threshold and less than a fifth threshold.

The temperature processing apparatus compares the effective temperature value of the first effective channel with a fourth threshold and a fifth threshold respectively, and if the effective temperature value of the first effective channel is greater than the fourth threshold and less than the fifth threshold, takes the first effective channel as the second effective channel. In this embodiment, the fourth threshold is set according to actual needs, and are not limited herein.

On the basis of the above embodiments, further, obtaining an effective temperature value of each first effective channel based on multi-frame temperature values of each first effective channel includes:

calculating an absolute value of a difference between the current frame temperature value and the previous frame temperature value of the first effective channel to obtain a neighboring difference; taking the current frame temperature value of the first effective channel as the effective temperature value of the first effective channel when determining that the neighboring difference is less than or equal to a sixth threshold; and taking the previous frame temperature value of the first effective channel as the effective temperature value of the first effective channel when determining that the neighboring difference is greater than the sixth threshold.

Specifically, the temperature processing apparatus calculates an absolute value of a difference between the current frame temperature value and the previous frame temperature value of the first effective channel as a neighboring difference, then compares the neighboring difference with a sixth threshold; if the neighboring difference is less than or equal to the sixth threshold, takes the current frame temperature value of the first effective channel as the effective temperature value of the first effective channel; and if the neighboring difference is greater than the sixth threshold, takes the previous frame temperature value of the first effective channel as the effective temperature value of the first effective channel. Determining the effective temperature value by the above process may effectively overcome the pulse interference caused by accidental factors. In this embodiment, the sixth threshold is set according to actual experiences and is not limited herein.

On the basis of the above embodiments, further, obtaining an effective temperature value of each first effective channel based on multi-frame temperature values of each first effective channel includes:

acquiring temperature values of q frames of the first effective channel, the temperature values of q frames including the current frame temperature value of the first effective channel, where q is an odd number greater than or equal to 3; sorting the temperature values of q frames in a descending order, and obtaining a temperature value in the middle of the order as the effective temperature value of the first effective channel.

Specifically, the temperature processing apparatus acquires temperature values of q frames of the first effective channel, sorts the temperature values of q frames in a descending order, and obtains a temperature value in the middle of the order from the sorting results as the effective temperature value of the first effective channel, where the temperature values of q frames include the current frame temperature value of the first effective channel, and q is an odd number greater than or equal to 3. Determining the effective temperature value by the above process may effectively overcome the fluctuation and interference caused by accidental factors and achieve a good filtering effect on the slowly changed temperature.

For example, if q is 5, the temperature processing apparatus obtains temperature values of five consecutive frames including the current frame temperature value of the first effective channel, and sorts the temperature values of five frames in a descending order. The sorting results are marked as a first temperature value, a second temperature value, a third temperature value, a fourth temperature value and a fifth temperature value, in which the first temperature value is the largest and the fifth temperature value is the smallest, then the temperature value in the middle of the order, i.e., the third temperature value, is obtained as the effective temperature value of the first effective channel.

On the basis of the above embodiments, further, the current frame temperature value of each channel is obtained by a different filtering algorithm.

Specifically, each channel corresponds to a filtering algorithm, and the filtering algorithm corresponding to each channel is different from each other. The current frame temperature value of each channel is obtained by filtering by preforming different filtering algorithms to the temperature collection signal from the one same temperature sensor. In this embodiment, the filtering algorithm is selected according to actual needs and is not limited herein.

For example, three filtering algorithms, i.e., a median filtering algorithm, a nonlinear Kalman filtering algorithm and an adaptive robust Kalman filtering algorithm, are adopted to filter the temperature collection signal from the same one temperature sensor to obtain the current frame temperature values of three channels.

On the basis of the above embodiments, further, the temperature processing method provided by the embodiment of the present disclosure further includes:

the temperature sensor corresponding to each channel is restarted to perform temperature collection again, when determining that a total number of the third effective channels is less than a set value.

Specifically, under the condition that the current frame temperature value of each channel is obtained by a different filtering algorithm, the temperature processing apparatus counts a total number of the third effective channels, and compares the total number of the third effective channels with a set value. If the total number of the third effective channels is less than the set value, it means that the temperature collection signal of the temperature sensor corresponding to each channel is invalid, and the temperature sensor corresponding to each channel may be restarted to perform temperature collection again. In this embodiment, each channel corresponds to a same one temperature sensor. The set value is set according to actual needs and is not limited herein.

On the basis of the above embodiments, further, the temperature processing method provided by the embodiment of the present disclosure further includes:

when the temperature sensor is continuously restarted for a first preset number of times, promoting a failure of the temperature sensor.

Specifically, under the condition that the current frame temperature value of each channel is obtained by a different filtering algorithm, if the temperature sensor has been continuously restarted for a first preset number of times, it means that the temperature sensor itself is failed and cannot accurately perform temperature collection, and a failure of the temperature sensor may be promoted. In this embodiment, the first preset number of times may be 3, which is set according to actual needs and is not limited herein.

For example, the failure of the temperature sensor may be prompted by an alarm message or an alarm sound.

On the basis of the above embodiments, further, the current frame temperature value of each channel is obtained by a different temperature sensor.

Specifically, each channel corresponds to a temperature sensor, the temperature sensor corresponding to each channel is different from each other, and the temperature collection object of the temperature sensor corresponding to each channel is the same. In this embodiment, each channel is configured with the same filtering algorithm to filter the temperature collection signal of the corresponding temperature sensor to obtain the current frame temperature value of the channel.

For example, five temperature sensors may be provided to collect the temperature of a same object.

On the basis of the above embodiments, further, the temperature processing method according to the embodiment of the present disclosure further includes:

when the temperature sensor corresponding to the channel is continuously restarted for a second preset number of times, promoting a failure of the temperature sensor corresponding to the channel.

Specifically, under the condition that the current frame temperature value of each channel is obtained by a different temperature sensor, the temperature processing apparatus counts the number of times of continuous restart of the temperature sensor corresponding to each channel. If the temperature sensor corresponding to the channel is continuously restarted for a second preset number of times, it means that the temperature sensor corresponding to the channel is failed and cannot accurately perform temperature collection, and a failure of the temperature sensor corresponding to the channel may be promoted. In this embodiment, the second preset number of times may be 3, which is set according to actual needs and is not limited herein.

Next, a process of performing temperature collection for a same object using three different temperature sensors is taken as an example to illustrate an implementation process of the temperature processing method according to the embodiment of the present disclosure.

A temperature detection system is provided with a temperature sensor 1, a temperature sensor 2 and a temperature sensor 3, each collecting a temperature value every 100 ms and sending it to the temperature processing apparatus, in which channel 1 is corresponding to the temperature sensor 1, channel 2 is corresponding to the temperature sensor 2, and channel 3 is corresponding to the temperature sensor 3; and the first threshold is set to 1, the second threshold is set to 1, and the third threshold is set to 1.

The temperature data obtained by the temperature sensor 1, the temperature sensor 2 and the temperature sensor 3 and related processing results are shown in Table 1.

Table 1: Temperature Data and Related Processing Results

|  |  | 1 | 2 | 3 | 4 | 5 |
|---|---|---|---|---|---|---|
| Channel 1 | Temperature value (°C) | 18.52 | 19.28 | 19.20 | 20.09 | 19.25 |
|  | Temperature variation | 0.42 | 0.76 | 0.08 | 0.89 | 0.84 |
|  | Temperature variance | 0.24 | 0.31 | 0.23 | 0.47 | 0.44 |
| Channel 2 | Temperature value (°C) | 18.55 | 19.19 | 19.43 | 20.24 | 19.36 |
|  | Temperature variation | 0.49 | 0.64 | 0.24 | 0.81 | 0.88 |
|  | Temperature variance | 0.23 | 0.37 | 0.26 | 0.41 | 0.42 |
| Channel 3 | Temperature value (°C) | 18.97 | 19.24 | 39.43 | 19.55 | 19.86 |
|  | Temperature variation | 0.16 | 0.27 | 20.19 | 0.31 | 0.69 |
|  | Temperature variance | 0.26 | 0.33 | - | 0.43 | 0.31 |
| Current frame output temperature value (°C) |  | 18.68 | 19.24 | 19.32 | 19.96 | 19.49 |

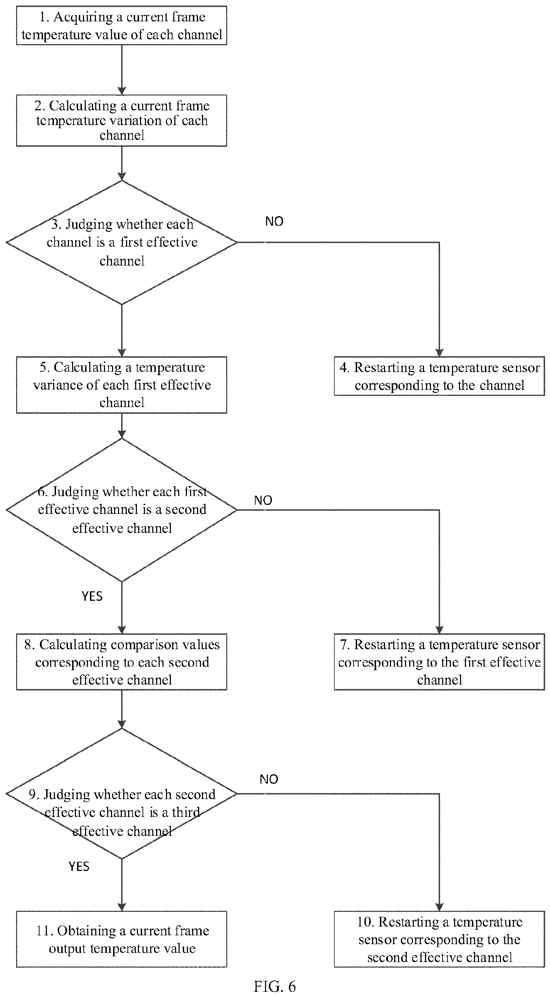

FIG. 6 illustrates a flowchart of a temperature processing method according to a sixth embodiment of the present disclosure. As illustrated in FIG. 6, an implementation process of the temperature processing method according to the embodiment of the present disclosure is as follows:

Step 1: acquiring a current frame temperature value of each channel. Temperature data collected by a temperature sensor 1, a temperature sensor 2 and a temperature sensor 3 is sent to a temperature processing apparatus. The temperature processing apparatus obtains the current frame temperature values of channel 1, channel 2 and channel 3.

The temperature processing apparatus sequentially obtains temperature data of five frames. A first frame data includes: the current frame temperature value of channel 1 is 18.52, the current frame temperature value of channel 2 is 18.55, and the current frame temperature value of channel 3 is 18.97; a second frame data includes: the current frame temperature of channel 1 is 19.28, the current frame temperature of channel 2 is 19.19, and the current frame temperature of channel 3 is 19.24; and a third frame data, a fourth frame data and a fifth frame data is shown in Table 1 and will not be repeated here.

Step 2: calculating a current frame temperature variation of each channel. The temperature processing apparatus calculates an absolute value of a difference between the current frame temperature value and a previous frame temperature value of each of three channels, and obtain the current frame temperature variation of each of the three channels.

For the first frame data, the temperature processing apparatus calculates the absolute values of the difference between the current frame temperature value and the previous frame temperature value of each of the three channels, and obtains that a temperature variation of channel 1 is 0.24, a temperature variation of channel 2 is 0.49, and a temperature variation of channel 3 is 0.16. For the second frame data, the third frame data, the fourth frame data and the fifth frame data, the calculated temperature variations of the three channels are shown in Table 1, and will not be repeated here. In this embodiment, for the fourth frame data, since the third frame data of the temperature value of channel 3 is invalid, the temperature variation of channel 3 is calculated by subtracting the temperature value of channel 3 of the second frame data from the temperature value of channel 3 of the fourth frame data.

Step 3: judging whether each channel is a first effective channel. The temperature processing apparatus compares the current frame temperature variation of each channel with a first threshold 1; if the temperature variation of the channel is less than 1, determines that the channel is the first effective channel, and enters Step 5; and if the temperature variation of the channel is greater than or equal to 1, determines that the channel is not the first effective channel, and enters Step 4.

For the first frame data, the temperature variation of channel 1 is 0.42, the temperature variation of channel 2 is 0.49, and the temperature variation of channel 3 is 0.16, all of which are less than 1. Therefore, channel 1, channel 2 and channel 3 are all taken as the first effective channels, which may be marked as a first effective channel 1, a first effective channel 2 and a first effective channel 3, respectively. Similarly, it may be determined that channel 1, channel 2 and channel 3 are the first effective channels for the second frame data, the fourth frame data and the fifth frame data.

For the third frame data, the temperature variation of channel 1 is 0.08 and the temperature variation of channel 2 is 0.24, both of which are less than 1. Therefore, channel 1 and channel 2 are taken as the first effective channels. However, the temperature variation of channel 3 is 20.19, which is greater than 1, so channel 3 is not the first effective channel.

Step 4: restarting a temperature sensor corresponding to the channel. The temperature processing apparatus resets the channel with the current frame temperature variation greater than or equal to 1.

For the third frame data, the temperature change of channel 3 is 20.19, which is greater than 1, and channel 3 will be reset, that is, the temperature sensor 3 corresponding to channel 3 will be restarted.

For the first frame data, the second frame data, the fourth frame data and the fifth frame data, it is unnecessary to reset the channel.

Step 5: calculating a temperature variance of each first effective channel. The temperature processing apparatus obtains the temperature variance of each first effective channel based on a variance of the temperature values of the latest 20 frames of each first effective channel.

For the first frame data, the temperature processing apparatus calculates the variance of the temperature values of the latest 20 frames of each of three first effective channels, and obtains that a temperature variance of the first effective channel 1 is 0.24, a temperature variance of the first effective channel 2 is 0.23, and a temperature variance of the first channel 3 is 0.26. The temperature variances of the three channels calculated for the second frame data, the fourth frame data and the fifth frame data are shown in Table 1, and will not be repeated here.

For the third frame data, the temperature processing apparatus calculates the variance of the temperature values of the latest 20 frames of either of two first effective channels, and obtains that a temperature variance of the first effective channel 1 is 0.23 and a temperature variance of the first effective channel 2 is 0.26.

Step 6: judging whether each first effective channel is a second effective channel. The temperature processing apparatus compares the temperature variance of each first effective channel with a second threshold 1; if the temperature variance of the first effective channel is less than 1, determines that the channel is the second effective channel, and enters Step 8; and if the temperature variance of the channel is greater than or equal to 1, determines that the channel is not the second effective channel, and enters Step 7.

For the first frame data, the temperature variance of the first effective channel 1 is 0.24, the temperature variance of the first effective channel 2 is 0.23, and the temperature variance of the first effective channel 3 is 0.26, all of which are less than 1. Therefore, the first effective channel 1, the first effective channel 2 and the first effective channel 3 are all taken as the second effective channels, which may be marked as a second effective channel 1, a second effective channel 2 and a second effective channel 3, respectively. Similarly, it may be determined that the first effective channel 1, the first effective channel 2 and the first effective channel 3 are all the second effective channels for the second frame data, the fourth frame data and the fifth frame data.

For the third frame data, the temperature variance of the first effective channel 1 is 0.23 and the temperature variance of the first effective channel 2 is 0.26, both of which are less than 1. Therefore, the first effective channel 1 and the first effective channel 2 are both taken as the second effective channels.

Step 7: restarting a temperature sensor corresponding to the first effective channel. The temperature processing apparatus resets the first effective channel, that is, restarts the temperature sensor corresponding to the first effective channel, so as to perform temperature collection again.

Step 8: calculating comparison values corresponding to each second effective channel. The temperature processing apparatus calculates an absolute value of a difference between the current frame temperature value of each second effective channel and the current frame temperature value of each of the remaining second effective channels to obtain comparison values corresponding to the second effective channel.

For the first frame data, an absolute value of a difference between the current frame temperature value 18.52 of the second effective channel 1 and the current frame temperature value 18.55 of the second effective channel 2 is calculated as 0.03, an absolute value of a difference between the current frame temperature value 18.52 of the second effective channel 1 and the current frame temperature value 18.97 of the second effective channel 3 is calculated as 0.45, and then 0.03 and 0.45 are the comparison values corresponding to the second effective channel 1. Similarly, the comparison values 0.03 and 0.42 corresponding to the second effective channel 2 and the comparison values 0.04 and 0.05 corresponding to the second effective channel 3 may be calculated.

Similarly, for the second frame data, the fourth frame data and the fifth frame data, it is possible to calculate the comparison values corresponding to the second effective channel 1, the comparison values corresponding to the second effective channel 2 and the comparison values corresponding to the second effective channel 3, respectively.

For the third frame data, it is also possible to calculate the comparison values corresponding to the second effective channel 1 and the comparison value corresponding to the second effective channel 2.

Step 9: judging whether each second effective channel is a third effective channel. The temperature processing apparatus counts the number of comparison values less than a third threshold among the comparison values corresponding to the second effective channel; if the number of comparison values less than the third threshold among the comparison values corresponding to the second effective channel is greater than a preset value 0, takes the second effective channel as the third effective channel, and enters Step 11; and if the number of comparison values less than the third threshold among the comparison values corresponding to the second effective channel is equal to 0, enters Step 10.

For the first frame data, the comparison values 0.03 and 0.45 corresponding to the second effective channel 1 are both less than 1, and the number of comparison values less than 1 is 2, which is greater than 0. The second effective channel is taken as the third effective channel and marked as a third effective channel 1. Similarly, it may be determined that the second effective channel 2 and the second effective channel 3 are both the third effective channels, which are marked as a third effective channel 2 and a third effective channel 3, respectively.

Similarly, it may be judged that the second effective channel 1, the second effective channel 2 and the second effective channel 3 are all the third effective channels for the second frame data, the fourth frame data and the fifth frame data.

Similarly, it may be judged that the second effective channel 1 and the second effective channel 2 are both the third effective channels for the third frame data.

Step 10: restarting a temperature sensor corresponding to the second effective channel. The temperature processing apparatus resets the second effective channel, that is, restarts the temperature sensor corresponding to the second effective channel, so as to perform temperature collection again.

Step 11: obtaining a current frame output temperature value. The temperature processing apparatus calculates an average value of the current frame temperature values of all of the respective third effective channel as a current frame output temperature value. Next, the flow returns to Step 1 for circulation.

For the first frame data, an average value of the current frame temperature value 18.52 of the third effective channel 1, the current frame temperature value 18.55 of the third effective channel 2 and the current frame temperature value 18.97 of the third effective channel 3 is calculated to be 18.68, so the current frame output temperature value is 18.68.

Similarly, for the second frame data, the fourth frame data and the fifth frame data, an average value of the current frame temperature values of the third effective channel 1, the current frame temperature values of the third effective channel 2 and the current frame temperature values of the third effective channel 3 are respectively calculated as the current frame output temperature values, and the calculation results are shown in Table 1.

For the third frame data, an average of the current frame temperature value 19.2 of the third effective channel 1 and the current frame temperature value 19.43 of the third effective channel 2 is calculated to be 19.32, so the current frame output temperature value is 19.32.

Next, a process of processing a temperature collection signal collected by the same one temperature sensor using three different filtering algorithms is taken as an example to illustrate an implementation process of the temperature processing method according to the embodiment of the present disclosure.

A temperature detection system is provided with a temperature sensor X which collects a temperature value every 100 ms to obtain a temperature collection signal and send it to the temperature processing apparatus. The temperature processing apparatus filters the temperature collection signal using three different filtering algorithms to obtain the current frame temperature values of three channels. In this embodiment, the three filtering algorithms are a median filtering algorithm, a nonlinear Kalman filtering algorithm and an adaptive robust Kalman filtering algorithm. The median filtering algorithm is corresponding to channel I, the nonlinear Kalman filtering algorithm is corresponding to channel II, and the adaptive robust Kalman filtering algorithm is corresponding to channel III. The first threshold is set to 1, the second threshold is set to 1, and the third threshold is set to 1.

Temperature values obtained by filtering temperature collection information of the temperature sensor X and the related processing results are shown in Table 2.

Table 2: Temperature Values and Related Processing Results

|  |  | 1 | 2 | 3 | 4 | 5 |
|---|---|---|---|---|---|---|
| Channel I | Temperature value (°C) | 25.84 | 25.77 | 25.79 | 25.89 | 25.79 |
|  | Temperature variation | 0.06 | 0.07 | 0.02 | 0.10 | 0.10 |
|  | Temperature variance | 0.62 | 0.57 | 0.48 | 0.52 | 0.49 |
| Channel II | Temperature value (°C) | 25.81 | 25.79 | 49.65 | 25.82 | 25.85 |
|  | Temperature variation | 0.12 | 0.02 | 23.86 | 0.03 | 0.03 |
|  | Temperature variance | 0.43 | 0.24 | - | 0.29 | 0.35 |
| Channel III | Temperature value (°C) | 25.88 | 25.77 | 25.80 | 25.78 | 25.83 |
|  | Temperature variation | 0.07 | 0.11 | 0.03 | 0.02 | 0.05 |
|  | Temperature variance | 0.23 | 0.26 | 0.35 | 0.33 | 0.39 |
| Current frame output temperature value (°C) | | 25.84 | 25.78 | 25.80 | 25.83 | 25.82 |

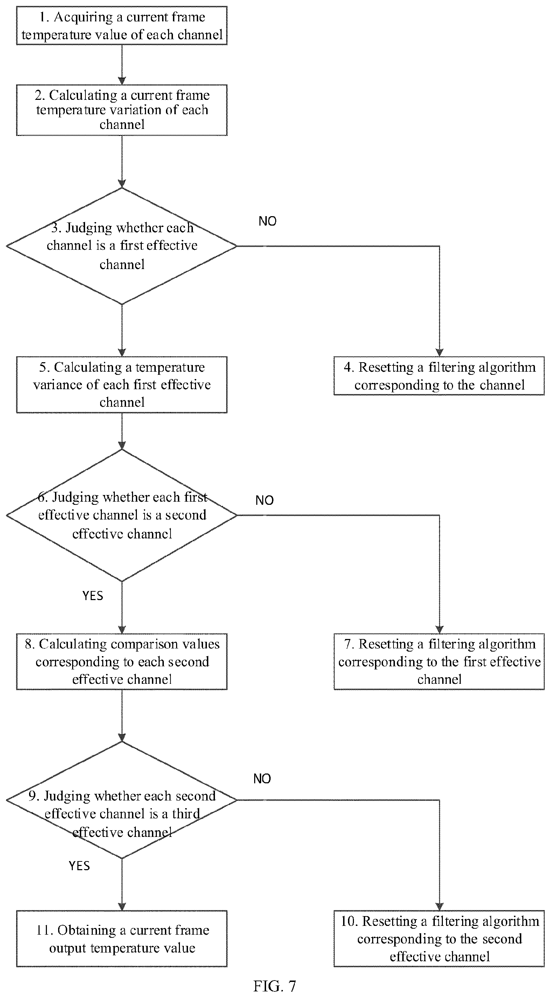

FIG. 7 illustrates a flowchart of a temperature processing method according to a seventh embodiment of the present disclosure. As illustrated in FIG. 7, an implementation process of the temperature processing method according to the embodiment of the present disclosure is as follows:

Step 1: acquiring a current frame temperature value of each channel. A temperature sensor X sends a collected temperature collection signal to a temperature processing apparatus, the temperature processing apparatus filters the temperature collection signal using three filtering algorithms to obtain current frame temperature values of channel I, channel II and channel III, respectively.

The temperature processing apparatus sequentially obtains temperature data of five frames. A first frame data includes: the current frame temperature value of channel I is 25.84, the current frame temperature value of channel II is 25.81, and the current frame temperature value of channel III is 25.88. A second frame data, a third frame data, a fourth frame data and a fifth frame data is shown in Table 2 and will not be repeated here.

Step 2: calculating a current frame temperature variation of each channel. The temperature processing apparatus calculates an absolute value of a difference between the current frame temperature value and a previous frame temperature value of each of three channels, and obtain the current frame temperature variation of each of the three channels.

For the first frame data, the temperature processing apparatus calculates the absolute values of the difference between the current frame temperature value and the previous frame temperature value of each of the three channels, and obtains that a temperature variation of channel I is 0.06, a temperature variation of channel II is 0.12, and a temperature variation of channel III is 0.07. For the second frame data, the third frame data, the fourth frame data and the fifth frame data, the calculated temperature variations of the three channels are shown in Table 2, and will not be repeated here. In this embodiment, for the fourth frame data, since the temperature value of channel II in the third frame data is invalid, the temperature variation of channel II is calculated by subtracting the temperature value of channel II of the second frame data from the temperature value of channel II of the fourth frame data.

Step 3: judging whether each channel is a first effective channel. The temperature processing apparatus compares the current frame temperature variation of each channel with a first threshold 1; if the temperature variation of the channel is less than 1, determines that the channel is the first effective channel, and enters Step 5; and if the temperature variation of the channel is greater than or equal to 1, determines that the channel is not the first effective channel, and enters Step 4.

For the first frame data, the temperature variation of channel I is 0.06, the temperature variation of channel II is 0.12, and the temperature variation of channel III is 0.07, all of which are less than 1. Therefore, channel I, channel II and channel III are all taken as the first effective channels, which may be marked as a first effective channel I, a first effective channel II and a first effective channel III, respectively. Similarly, it may be determined that channel I, channel II and channel III are the first effective channels for the second frame data, the fourth frame data and the fifth frame data.

For the third frame data, the temperature variation of channel I is 0.02 and the temperature variation of channel II is 0.03, both of which are less than 1. Therefore, channel I and channel III are taken as the first effective channels. However, the temperature variation of channel II is 23.86, which is greater than 1, so channel II is not the first effective channel.

Step 4: resetting a filtering algorithm corresponding to the channel. The temperature processing apparatus resets the channel with the current frame temperature variation greater than or equal to 1, i.e., resets the filtering algorithm corresponding to the channel.

For the third frame data, the temperature variation of channel II is 23.86, which is greater than 1, and channel II will be reset, that is, the filtering algorithm corresponding to channel II will be restarted.

For the first frame data, the second frame data, the fourth frame data and the fifth frame data, it is unnecessary to reset the channel.

Step 5: calculating a temperature variance of each first effective channel. The temperature processing apparatus obtains the temperature variance of each first effective channel based on a variance of the temperature values of the latest 20 frames of each first effective channel.

For the first frame data, the temperature processing apparatus calculates the variance of the temperature values of the latest 20 frames of each of three first effective channels, and obtains that a temperature variance of the first effective channel I is 0.62, a temperature variance of the first effective channel II is 0.43, and a temperature variance of the first channel III is 0.23. The temperature variances of the three channels calculated for the second frame data, the fourth frame data and the fifth frame data are shown in Table 2, and will not be repeated here.

For the third frame data, the temperature processing apparatus calculates the variance of the temperature values of the latest 20 frames of either of two first effective channels, and obtains that a temperature variance of the first effective channel I is 0.48 and a temperature variance of the first effective channel III is 0.35.

Step 6: judging whether each first effective channel is a second effective channel. The temperature processing apparatus compares the temperature variance of each first effective channel with a second threshold 1; if the temperature variance of the first effective channel is less than 1, determines that the channel is the second effective channel, and enters Step 8; and if the temperature variance of the channel is greater than or equal to 1, determines that the channel is not the second effective channel, and enters Step 7.

For the first frame data, the temperature variance of the first effective channel I is 0.48, the temperature variance of the first effective channel II is 0.43, and the temperature variance of the first effective channel III is 0.23, all of which are less than 1. Therefore, the first effective channel I, the first effective channel II and the first effective channel III are all taken as the second effective channels, which may be marked as a second effective channel I, a second effective channel II and a second effective channel III, respectively. Similarly, it may be determined that the first effective channel I, the first effective channel II and the first effective channel III are all the second effective channels for the second frame data, the fourth frame data and the fifth frame data.

For the third frame data, the temperature variance of the first effective channel I is 0.48 and the temperature variance of the first effective channel III is 0.35, both of which are less than 1. Therefore, the first effective channel I and the first effective channel III are both taken as the second effective channels.

Step 7: resetting the filtering algorithm corresponding to the first effective channel. The temperature processing apparatus resets the first effective channel, that is, restarts the filtering algorithm corresponding to the first effective channel, so as to perform filtering again.

Step 8: calculating comparison values corresponding to each second effective channel. The temperature processing apparatus calculates an absolute value of a difference between the current frame temperature value of each second effective channel and the current frame temperature value of each of the remaining second effective channels to obtain comparison values corresponding to the second effective channel.

For the first frame data, an absolute value of a difference between the current frame temperature value 25.84 of the second effective channel I and the current frame temperature value 25.81 of the second effective channel II is calculated as 0.03, an absolute value of a difference between the current frame temperature value 25.84 of the second effective channel I and the current frame temperature value 25.88 of the second effective channel II is calculated as 0.04, and then 0.03 and 0.04 are the comparison values corresponding to the second effective channel I. Similarly, the comparison values 0.03 and 0.07 corresponding to the second effective channel II and the comparison values 0.04 and 0.07 corresponding to the second effective channel III may be calculated.

Similarly, for the second frame data, the fourth frame data and the fifth frame data, it is possible to calculate the comparison values corresponding to the second effective channel I, the comparison values corresponding to the second effective channel II and the comparison values corresponding to the second effective channel III, respectively.

For the third frame data, it is also possible to calculate the comparison values corresponding to the second effective channel I and the comparison value corresponding to the second effective channel III.

Step 9: judging whether each second effective channel is a third effective channel. The temperature processing apparatus counts the number of comparison values less than a third threshold among the comparison values corresponding to the second effective channel; if the number of comparison values less than the third threshold among the comparison values corresponding to the second effective channel is greater than a preset value 0, takes the second effective channel as the third effective channel, and enters Step 11; and if the number of comparison values less than the third threshold among the comparison values corresponding to the second effective channel is equal to 0, enters Step 10.

For the first frame data, the comparison values 0.03 and 0.04 corresponding to the second effective channel I are both less than 1, and the number of comparison values less than 1 is 2, which is greater than 0. The second effective channel is taken as the third effective channel and marked as a third effective channel I. Similarly, it may be determined that the second effective channel II and the second effective channel III are both the third effective channels, which are marked as a third effective channel II and a third effective channel III, respectively.

Similarly, it may be determined that the second effective channel I, the second effective channel II and the second effective channel III are all the third effective channels for the second frame data, the fourth frame data and the fifth frame data.

Similarly, it may be determined that the second effective channel I and the second effective channel III are both the third effective channels for the third frame data.

Step 10: resetting the filtering algorithm corresponding to the second effective channel. The temperature processing apparatus resets the second effective channel, that is, restarts the filtering algorithm corresponding to the second effective channel, so as to perform filtering again.

Step 11: obtaining a current frame output temperature value. The temperature processing apparatus calculates an average value of the current frame temperature values of all of the respective third effective channel as a current frame output temperature value. Next, the flow returns to Step 1 for circulation.

For the first frame data, an average value of the current frame temperature value 25.84 of the third effective channel I, the current frame temperature value 25.81 of the third effective channel II and the current frame temperature value 25.88 of the third effective channel III is calculated to be 25.84, so the current frame output temperature value is 25.84.

Similarly, for the second frame data, the fourth frame data and the fifth frame data, an average value of the current frame temperature values of the third effective channel I, the current frame temperature values of the third effective channel II and the current frame temperature values of the third effective channel III are respectively calculated as the current frame output temperature values, and the calculation results are shown in Table 2.

For the third frame data, an average of the current frame temperature value 25.79 of the third effective channel I and the current frame temperature value 25.8 of the third effective channel III is calculated to be 25.80, so the current frame output temperature value is 25.80.

In the temperature processing method according to the embodiment of the present disclosure, by the design of redundancy function for collecting temperature, whether the temperature values returned by a plurality of temperature sensors or processed by a plurality of filtering algorithms are valid or not are judged, and the accuracy of temperature collection is improved. If the temperature values are invalid, collection or processing is performed again by restarting the temperature sensors or automatically resetting the filtering algorithms to obtain valid temperature values.

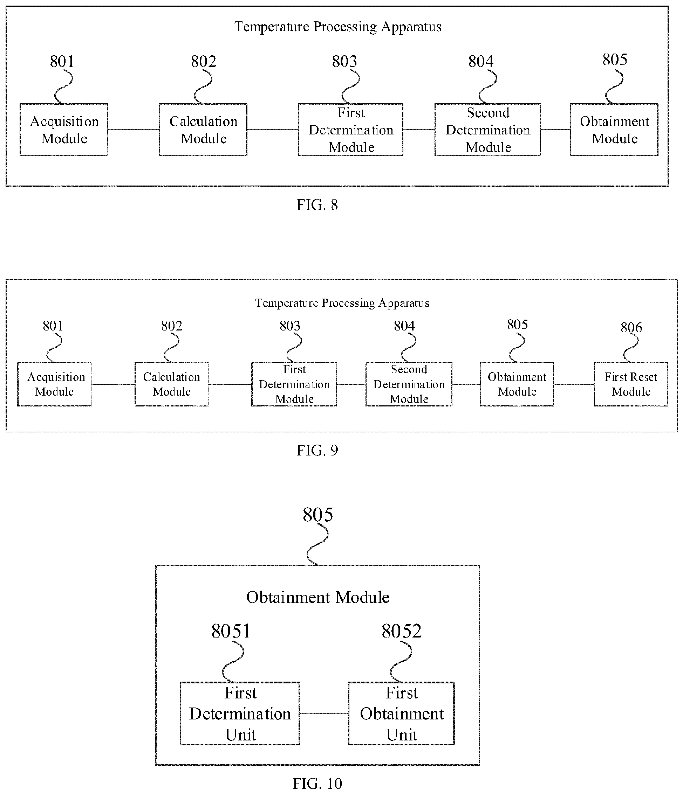

FIG. 8 illustrates a structural diagram of a temperature processing apparatus according to an eighth embodiment of the present disclosure. As illustrated in FIG. 8, the temperature processing apparatus according to the embodiment of the present disclosure includes an acquisition module 801, a calculation module 802, a first determination module 803, a second determination module 804 and an obtainment module 805, in which:

the acquisition module 801 is configured to acquire a current frame temperature value of each channel; the calculation module 802 is configured to calculate an absolute value of a difference between the current frame temperature value and a previous frame temperature value of each channel to obtain a current frame temperature variation of each channel; the first determination module 803 is configured to determine each first effective channel based on a first threshold and the current frame temperature variation of each channel; the second determination module 804 is configured to determine each second effective channel based on multi-frame temperature values of each first effective channel; and the obtainment module 805 is configured to obtain a current frame output temperature value based on the current frame temperature value of each second effective channel.

Specifically, the acquisition module 801 acquires a current frame temperature value of each channel. If each channel corresponds to one temperature sensor, the temperature sensor corresponding to each channel may collect temperature in real time and send the obtained temperature value to the acquisition module 801, the acquisition module 801 takes the received temperature value collected by the temperature sensor in real time as a current frame temperature value of the corresponding channel. If each channel corresponds to one filtering algorithm and different filtering algorithms correspond to a same one temperature sensor, the temperature sensor may collect temperature in real time to obtain a temperature collection signal, and the acquisition module 801 processes the temperature collection signal using different filtering algorithms to obtain a current frame temperature value of each channel. In this embodiment, the number of the channels is at least two, which is set according to actual needs and is not limited herein.

After obtaining the current frame temperature value of each channel, the calculation module 802 calculates an absolute value of a difference between the current frame temperature value and a previous frame temperature value of each channel as a current frame temperature variation of the channel. The calculation module 802 obtains the current frame temperature variation of each channel.

The first determination module 803 compares the current frame temperature variation of each channel with a first threshold, and judges whether the channel is a first effective channel based on a comparison result, in which each first effective channel is uniquely corresponding to one channel. The first determination module 803 obtains each first effective channel. In this embodiment, the first threshold is set according to actual needs and is not limited herein.

The second determination module 804 acquires multi-frame temperature values of each first effective channel, and determine each second effective channel based thereon.

After obtaining each second effective channel, the obtainment module 805 obtains a current frame output temperature value based on the current frame temperature value of each second effective channel.

The temperature processing apparatus according to the embodiment of the present disclosure acquires a current frame temperature value of each channel, calculate an absolute value of a difference between the current frame temperature value and a previous frame temperature value of each channel, obtains a current frame temperature variation of each channel, determines each first effective channel based on the current frame temperature variation of each channel and a first threshold, determines each second effective channel based on multi-frame temperature values of each first effective channel, and obtains a current frame output temperature value based on the current frame temperature value of each second effective channel, thereby improving the accuracy of temperature collection.

On the basis of the above embodiments, further, the first determination module 803 is configured to:
take the channel as the first effective channel when determining that the current frame temperature variation of the channel is less than the first threshold.

Specifically, the first determination module 803 compares the current frame temperature variation of the channel with the first threshold, and if the current frame temperature variation of the channel is less than the first threshold, takes the channel as the first effective channel, and the first effective channel corresponds to the channel. The current frame temperature value of the channel is taken as a current frame temperature value of the corresponding first effective channel, and the temperature sensor or the filtering algorithm corresponding to the channel is taken as a temperature sensor or a filtering algorithm corresponding to the corresponding first effective channel.

FIG. 9 illustrates a structural diagram of a temperature processing apparatus according to a ninth embodiment of the present disclosure. As illustrated in FIG. 9, on the basis of the above embodiments, the temperature processing apparatus according to the embodiment of the present disclosure further includes a first reset module 806, wherein:
the first reset module 806 is configured to reset the channel when determining that the current frame temperature variation of the channel is greater than or equal to the first threshold.

Specifically, the current frame temperature variation of the channel is compared with the first threshold, and if the current frame temperature variation of the channel is greater than or equal to the first threshold, it means that the temperature value obtained from the channel is unstable, and the first reset module 806 may reset the channel.

On the basis of the above embodiments, further, the obtainment module 805 is configured to:
calculate an average value of the current frame temperature values of all of the respective second effective channels as the current frame output temperature value.

Specifically, the current frame temperature values of all of the respective second effective channels are all valid, and the obtainment module 805 may calculate an average value of the current frame temperature values of all of the respective second effective channels, and take the calculated average value as the current frame output temperature value.

FIG. 10 illustrates a structural diagram of a temperature processing apparatus according to a tenth embodiment of the present disclosure. As illustrated in FIG. 10, on the basis of the above embodiments, the obtainment module 805 further includes a first determination unit 8051 and a first obtainment unit 8052, in which:
the first determination unit 8051 is configured to determine each third effective channel based on the current frame temperature value of each second effective channel; and the first obtainment unit 8052 is configured to obtain a current frame output temperature value based on the current frame temperature value of each third effective channel.

Specifically, after determining each second effective channel, the first determination unit 8051 compares the current frame temperature value of each second effective channel with the current frame temperature value of each of the remaining second effective channels, and judges whether the second effective channel is a third effective channel based on a comparison result, in which the third effective channel is uniquely corresponding to one second effective channel. The first determination unit 8051 obtains each third effective channel.

After obtaining each third effective channel, the first obtainment unit 8052 obtains a current frame output temperature value based on the current frame temperature value of each third effective channel.

On the basis of the above embodiments, further, the first obtainment unit 8052 is configured to:
calculate an average value of the current frame temperature values of all of the respective third effective channel as the current frame output temperature value.

Specifically, the current frame temperature values of all of the respective third effective channels are all valid, and the first obtainment unit 8052 calculates an average value of the current frame temperature values of all of the respective third effective channels, and take the calculated average value as the current frame output temperature value.

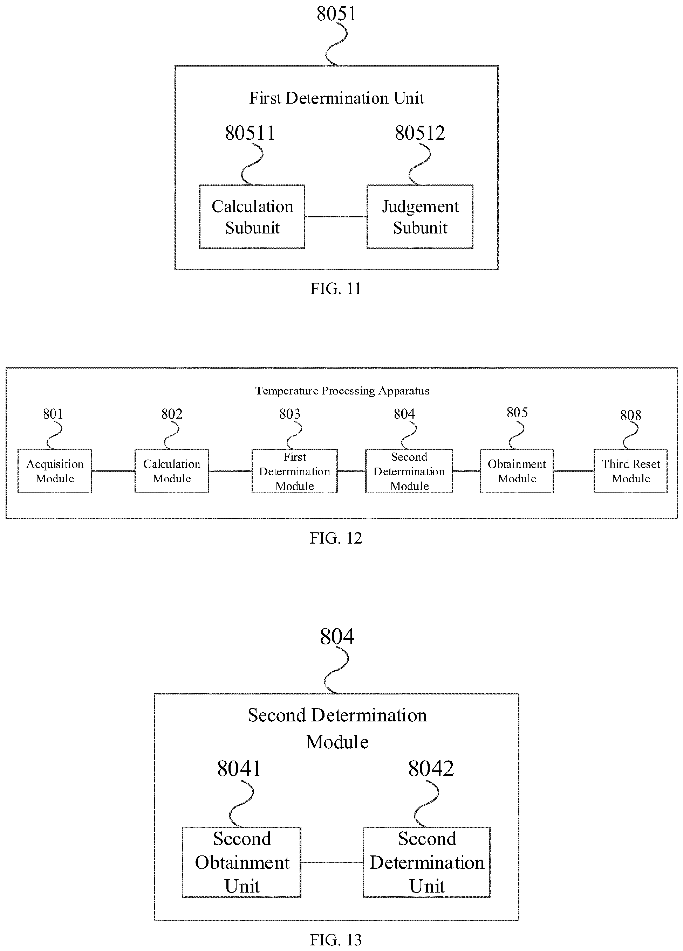

FIG. 11 illustrates a structural diagram of a temperature processing apparatus according to an eleventh embodiment of the present disclosure. As illustrated in FIG. 11, on the basis of the above embodiments, further, the first determination unit 8051 includes a calculation subunit 80511 and a judgement subunit 80512, in which:
the calculation subunit 80511 is configured to calculate an absolute value of a difference between the current frame temperature value of the second effective channel and the current frame temperature value of each of the remaining second effective channels, and obtain comparison values corresponding to the second effective channel; and the judgement subunit 80512 is configured to take the second effective channel as the third effective channel when determining that the number of comparison values less than a third threshold among the comparison values corresponding to the second effective channel is greater than a preset value.

Specifically, the calculation subunit 80511 calculates an absolute value of a difference between the current frame temperature value of the second effective channel and the current frame temperature value of each of the remaining second effective channels, and obtain a comparison value corresponding to the second effective channel. It can be understood that there may be one or more comparison values corresponding to the second effective channel. The temperature processing apparatus obtain comparison values corresponding to each second effective channel.

The judgement subunit 80512 compares each of the comparison values corresponding to the second effective channel with a third threshold, and counts the number of comparison values less than the third threshold. If the number of comparison values less than the third threshold is greater than a preset value, it means that the current frame temperature value of the second effective channel is valid, and the second effective channel is taken as the third effective channel. Each third effective channel is uniquely corresponding to one second effective channel, and the current frame temperature value of the third effective channel is equal to the current frame temperature value of the corresponding second effective channel. In this embodiment, the third threshold is set according to actual needs and is not limited herein. The preset value is set according to actual needs and is not limited herein.

FIG. 12 illustrates a structural diagram of a temperature processing apparatus according to a twelfth embodiment of the present disclosure. As illustrated in FIG. 12, on the basis of the above embodiments, the temperature processing apparatus according to the embodiment of the present disclosure further includes a third reset module 808, in which:
the third reset module 808 is configured to reset the second effective channel when determining that the number of comparison values less than the third threshold among the comparison values corresponding to the second effective channel is less than or equal to the preset value.

Specifically, each of the comparison values corresponding to the second effective channel is compared with the third threshold, and the number of comparison values less than the third threshold is counted. If the number of comparison values less than the third threshold is less than or equal to the preset value, it means that the current frame temperature value corresponding to the second effective channel is invalid, and the third reset module 808 may reset the second effective channel.

FIG. 13 illustrates a structural diagram of a temperature processing apparatus according to a thirteenth embodiment of the present disclosure. As illustrated in FIG. 13, on the basis of the above embodiments, further, the second determination module 804 includes a second obtainment unit 8041 and a second determination unit 8042, in which:
the second obtainment unit 8041 is configured to obtain a temperature variance of each first effective channel based on a variance of temperature values of a latest preset number of frames of each first effective channel; and the second determination unit 8042 is configured to determine each second effective channel based on a second threshold and the temperature variance of each first effective channel.

Specifically, the second obtainment unit 8041 records the temperature values of the latest preset number of frames of each first effective channel, and then calculates a variance of the temperature values of the latest preset number of frames of each first effective channel to obtain a temperature variance of each first effective channel. In this embodiment, the temperature values of the latest preset number of frames of the first effective channel include the current frame temperature value of the first effective channel. The preset number of is set according to actual needs and is not limited here.

The second determination unit 8042 compares the temperature variance of each first effective channel with a second threshold, and judges whether the first effective channel is the second effective channel based on a comparison result, in which the second effective channel is uniquely corresponding to one first effective channel. The second determination unit 8042 obtains each second effective channel. In this embodiment, the second threshold is set according to actual needs and is not limited herein.

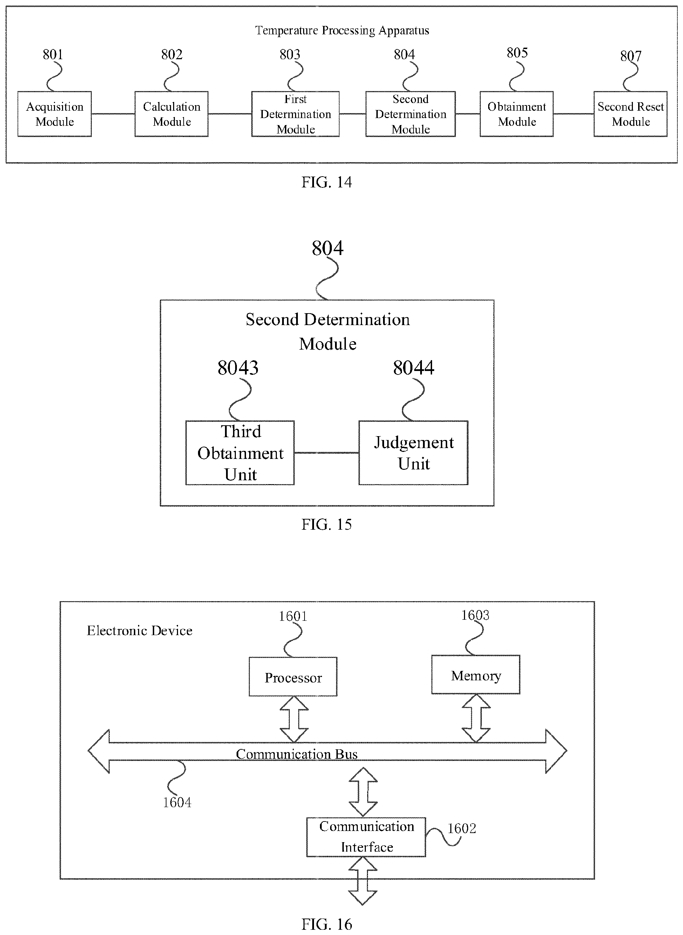

FIG. 14 illustrates a structural diagram of a temperature processing apparatus according to a fourteenth embodiment of the present disclosure. As illustrated in FIG. 14, on the basis of the above embodiments, the temperature processing apparatus according to the embodiment of the present disclosure further includes a second reset module 807, in which:

the second reset module 807 is configured to reset the first effective channel when determining that the temperature variance of the first effective channel is greater than or equal to the second threshold.

Specifically, the temperature variance of the first effective channel is compared with the second threshold, and if the temperature variance of the first effective channel is greater than or equal to the second threshold, it means that the temperature value obtained from the first effective channel is unstable for a time period, and the second reset module 807 may reset the first effective channel.

On the basis of the above embodiments, further, the second determination unit 8042 is configured to:

take the first effective channel as the second effective channel when determining that the temperature variance of the first effective channel is less than the second threshold.

Specifically, the second determination unit 8042 compares the temperature variance of the first effective channel with the second threshold, and if the temperature variance of the first effective channel is less than the second threshold, takes the first effective channel as the second effective channel, and the second effective channel corresponds to the first effective channel. The current frame temperature value of the first effective channel is taken as a current frame temperature value of the corresponding second effective channel, and the temperature sensor or the filtering algorithm corresponding to the first effective channel is taken as a temperature sensor or a filtering algorithm corresponding to the corresponding second effective channel.

FIG. 15 illustrates a structural diagram of a temperature processing apparatus according to a fifteenth embodiment of the present disclosure. As illustrated in FIG. 15, on the basis of the above embodiments, further, the second determination module 804 includes a third obtainment unit 8043 and a judgement unit 8044, in which:

the third obtainment unit 8043 is configured to obtain an effective temperature value of each first effective channel based on multi-frame temperature values of each first effective channel; and the judgement unit 8044 is configured to take the first effective channel as the second effective channel when determining that the effective temperature value of the first effective channel is greater than a fourth threshold and less than a fifth threshold.

Specifically, the third obtainment unit 8043 acquires temperature values of a plurality of frames of each first effective channel, and obtains an effective temperature value of each first effective channel based thereon.

The judgement unit 8044 compares the effective temperature value of the first effective channel with a fourth threshold and a fifth threshold respectively, and if the effective temperature value of the first effective channel is greater than the fourth threshold and less than the fifth threshold, takes the first effective channel as the second effective channel. In this embodiment, the fourth threshold and the fifth threshold are set according to actual needs, and are not limited herein.

On the basis of the above embodiments, further, the third obtainment unit 8043 is configured to:

calculate an absolute value of a difference between the current frame temperature value and the previous frame temperature value of the first effective channel to obtain a neighboring difference; take the current frame temperature value of the first effective channel as the effective temperature value of the first effective channel when determining that the neighboring difference is less than or equal to a sixth threshold; and take the previous frame temperature value of the first effective channel as the effective temperature value of the first effective channel when determining that the neighboring difference is greater than the sixth threshold.

Specifically, the third obtainment unit 8043 calculates an absolute value of a difference between the current frame temperature value and the previous frame temperature value of the first effective channel as a neighboring difference, then compares the neighboring difference with a sixth threshold; if the neighboring difference is less than or equal to the sixth threshold, takes the current frame temperature value of the first effective channel as the effective temperature value of the first effective channel; and if the neighboring difference is greater than the sixth threshold, takes the previous frame temperature value of the first effective channel as the effective temperature value of the first effective channel. Determining the effective temperature value by the above process effectively overcomes the pulse interference caused by accidental factors. In this embodiment, the sixth threshold is set according to actual experiences and is not limited herein.

On the basis of the above embodiments, further, the judgement unit 8044 is configured to:

acquire temperature values of q frames of the first effective channel, the temperature values of q frames including the current frame temperature value of the first effective channel, where q is an odd number greater than or equal to 3; sort the temperature values of q frames in a descending order, and obtain a temperature value in the middle of the order as the effective temperature value of the first effective channel.

Specifically, the judgement unit 8044 acquires temperature values of q frames of the first effective channel, sort the temperature values of q frames in a descending order, and obtains a temperature value in the middle of the order from the sorting results as the effective temperature value of the first effective channel, where the temperature values of q frames include the current frame temperature value of the first effective channel, and q is an odd number greater than or equal to 3. Determining the effective temperature value by the above process effectively overcomes the fluctuation and interference caused by accidental factors and achieves a good filtering effect on the slowly changed temperature.

The apparatus according to the embodiment of the present disclosure may specifically be configured to perform the processing flow of the aforementioned method, and the functions thereof are not repeated here. Please refer to the detailed description of the aforementioned method.

FIG. 16 illustrates a physical structural diagram of an electronic device according to a sixteenth embodiment of the present disclosure. As illustrated in FIG. 16, the electronic device may include a processor 1601, a communication interface 1602, a memory 1603 and a communication bus 1604, in which the processor 1601, the communication interface 1602 and the memory 1603 are communicated with each other through the communication bus 1604. The processor 1601 calls logical instructions in the memory 1603 to perform the following method: acquiring a current frame temperature value of each channel; calculating an absolute value of a difference between the current frame temperature value and a previous frame temperature value of each channel to obtain a current frame temperature variation of each channel; determining each first effective channel based on a first threshold and the current frame temperature variation of each channel; determining each second effective channel based on multi-frame temperature values of each first effective channel; and obtaining a current frame output temperature value based on the current frame temperature value of each second effective channel.

In addition, the logical instructions in the memory 1603 may be stored in a computer-readable storage medium when being realized in the form of software functional units and sold or used as independent products. Based on this understanding, the essence of the technical solutions of the present disclosure, i.e., portions making contributions to the prior art, or all or part of the technical solutions may be embodied in the form of a computer software product, which is stored in a storage medium and includes several instructions for causing a computer device (e.g., a personal computer, a server, a network device, etc.) to perform all or part of the steps of the methods according to the embodiments of the present disclosure. The foregoing storage medium includes various media that can store program codes, such as a USB flash disk, a mobile hard disk, a Read-Only Memory (ROM), a Random-Access Memory (RAM), a magnetic disk, or an optical disk.

This embodiment discloses a computer program product including a computer program stored in a non-transitory computer-readable storage medium, and the computer program includes a program instruction, and when the program instruction is executed by a computer, the computer implements the methods according to the above embodiments, including, for example, acquiring a current frame temperature value of each channel; calculating an absolute value of a difference between the current frame temperature value and a previous frame temperature value of each channel to obtain a current frame temperature variation of each channel; determining each first effective channel based on a first threshold and the current frame temperature variation of each channel; determining each second effective channel based on multi-frame temperature values of each first effective channel; and obtaining a current frame output temperature value based on the current frame temperature value of each second effective channel.

This embodiment provides a computer-readable storage medium storing a computer program, and the computer program enables a computer to implement the methods according to the above embodiments, including, for example, acquiring a current frame temperature value of each channel; calculating an absolute value of a difference between the current frame temperature value and a previous frame temperature value of each channel to obtain a current frame temperature variation of each channel; determining each first effective channel based on the current frame temperature variation of each channel and a first threshold; determining each second effective channel based on multi-frame temperature values of each first effective channel; and obtaining a current frame output temperature value based on the current frame temperature value of each second effective channel.

Those skilled in the art should appreciate that any embodiment of the present disclosure may be provided as a method, a system or a computer program product. Therefore, the present disclosure may take the form of a full hardware embodiment, a full software embodiment, or an embodiment combining software and hardware. Moreover, the present disclosure may take the form of a computer program product implemented on one or more computer-readable storage mediums (including, but not limited to, a magnetic disc memory, CD-ROM, optical storage, etc.) containing therein usable computer program codes.

The present disclosure is described with reference to a flowchart and/or a block diagram of the method, device (system) and computer program product according to the embodiments of the present disclosure. It should be appreciated that each flow and/or block in the flowchart and/or the block diagram and a combination of flows and/or blocks in the flowchart and/or the block diagram may be implemented by computer program instructions. Those computer program instructions may be provided to a general computer, a dedicated computer, an embedded processor or a processor of other programmable data processing device to produce a machine, so that the instructions executed by the processor of

**EP 4 379 336 B1**

the computer or other programmable data processing device produce means for realizing specified functions in one or more flows in the flowchart and/or one or more blocks in the block diagram.

These computer program instructions may also be stored in a computer readable memory with capable of guiding the computer or other programmable data processing devices to work in a particular manner, so that the instructions stored in the computer readable memory produces manufacture articles including an instructing apparatus which realizes function(s) specified in one or more flows in the flowchart and/or one or more blocks in the block diagram.

These computer program instructions may also be loaded onto a computer or other programmable data processing device to make the computer or other programmable data processing device implement a sequence of computer-implemented operations, so that the instructions executed by the computer or other programmable data processing device implement one or more processes of the flowcharts and/or one or more blocks of the block diagram.

In the present disclosure, descriptions referring to the terms such as 'an embodiment', 'a specific embodiment', 'some embodiments', 'for example', 'an example', 'a specific example' or 'some examples' mean that the specific features, structures, materials or characteristics described in connection with the embodiment(s) or example(s), are included in at least one embodiment or example of the present disclosure. In the present disclosure, the schematic expressions of the above terms do not necessarily refer to a same embodiment or example. Further, the specific features, structures, materials or characteristics described may be combined in any one or more embodiments or examples in a suitable manner.

**Claims**

1. A computer-implemented temperature processing method, **characterized in that** the method comprises:

    acquiring a current frame temperature value of each channel and a preset number of previous frame temperature values of each channel, wherein the number of the channels is at least two, and each channel corresponds to one temperature sensor, wherein the temperature sensor corresponding to each channel collects temperature in real time which is the current frame temperature value of the corresponding channel, or each channel corresponds to one filtering algorithm and different filtering algorithms correspond to one temperature sensor, the temperature sensor collects temperature in real time to obtain a temperature collection signal which is processed using the different filtering algorithms to obtain the current frame temperature value of each channel;
    calculating an absolute value of a difference between the current frame temperature value and the previous frame temperature value of each channel to obtain a current frame temperature variation of each channel;
    taking, based on a first threshold and the current frame temperature variation of each channel, the channel with the current frame temperature variation less than the first threshold as a first effective channel;
    determining a second effective channel based on multi-frame temperature values of each first effective channel, wherein the temperature values of the latest preset number of frames of each first effective channel are recorded, the temperature values of the latest preset number of frames are the multi-frame temperature values of each first effective channel, and the second effective channel is uniquely corresponding to one first effective channel; and
    obtaining a current frame output temperature value which is a temperature measurement result based on the current frame temperature value of each second effective channel, comprising: calculating an average value of the current frame temperature values of all of the second effective channels as the current frame output temperature value,
    wherein determining the second effective channel based on multi-frame temperature values of each first effective channel comprises:

        obtaining a temperature variance of each first effective channel based on a variance of temperature values of a latest preset number of frames of each first effective channel; and taking, based on a second threshold and the temperature variance of each first effective channel, the first effective channel with the temperature variance less than the second threshold as the second effective channel;
        or
        obtaining an effective temperature value of each first effective channel based on multi-frame temperature values of each first effective channel; and taking the first effective channel with the effective temperature value greater than a fourth threshold and less than a fifth threshold as the second effective channel.

2. The method according to claim 1,
    further comprising:
    resetting the channel when determining that the current frame temperature variation of the channel is greater than or equal to the first threshold.

3. The method according to claim 1,
   further comprising:
   resetting the first effective channel when determining that the temperature variance of the first effective channel is greater than or equal to the second threshold.

4. The method according to claim 1, wherein obtaining an effective temperature value of each first effective channel based on multi-frame temperature values of each first effective channel comprises:

   calculating an absolute value of a difference between the current frame temperature value and the previous frame temperature value of the first effective channel to obtain a neighboring difference;
   taking the current frame temperature value of the first effective channel as the effective temperature value of the first effective channel when determining that the neighboring difference is less than or equal to a sixth threshold; and
   taking the previous frame temperature value of the first effective channel as the effective temperature value of the first effective channel when determining that the neighboring difference is greater than the sixth threshold;
   or
   wherein obtaining an effective temperature value of each first effective channel based on multi-frame temperature values of each first effective channel comprises:

   acquiring temperature values of q frames of the first effective channel, the temperature values of q frames comprising the current frame temperature value of the first effective channel, where q is an odd number greater than or equal to 3; and
   sorting the temperature values of q frames in a descending order, and obtaining a temperature value in the middle of the order as the effective temperature value of the first effective channel.

5. The method according to any one of claims 1 to 4, further comprising:

   resetting a temperature sensor corresponding to each channel to perform temperature collection again, when determining that a total number of the third effective channels is less than a set value;
   or
   further comprising:
   when the temperature sensor still needs to be restarted after being continuously restarted for a first preset number of times, promoting a failure of the temperature sensor.

6. The method according to any one of claims 1 to 4, wherein the current frame temperature value of each channel is obtained by a different temperature sensor;

   preferably wherein
   further comprising:
   when a temperature sensor corresponding to the channel is continuously restarted for a second preset number of times, promoting a failure of the temperature sensor corresponding to the channel.

7. A temperature processing apparatus, **characterized in that** the apparatus comprises:

   an acquisition module configured to acquire a current frame temperature value of each channel and a preset number of previous frame temperature values of each channel, wherein the number of the channels is at least two, and each channel corresponds to one temperature sensor, wherein the temperature sensor corresponding to each channel collects temperature in real time which is the current frame temperature value of the corresponding channel, or each channel corresponds to one filtering algorithm and different filtering algorithms correspond to one temperature sensor, the temperature sensor collects temperature in real time to obtain a temperature collection signal which is processed using the different filtering algorithms to obtain the current frame temperature value of each channel;
   a calculation module configured to calculate an absolute value of a difference between the current frame temperature value and the previous frame temperature value of each channel to obtain a current frame temperature variation of each channel;
   a first determination module configured to take, based on a first threshold and the current frame temperature variation of each channel, the channel with the current frame temperature variation less than the first threshold as a first effective channel;

a second determination module configured to determine a second effective channel based on multi-frame temperature values of each first effective channel, wherein the temperature values of the latest preset number of frames of each first effective channel are recorded, the temperature values of the latest preset number of frames are taken as the multi-frame temperature values of each first effective channel, and the second effective channel is uniquely corresponding to one first effective channel; and

an obtainment module configured to obtain a current frame output temperature value which is a temperature measurement result based on the current frame temperature value of each second effective channel comprising calculating an average value of the current frame temperature values of all of the respective second effective channels as the current frame output temperature value

wherein the second determination module is configured to:

obtain a temperature variance of each first effective channel based on a variance of temperature values of a latest preset number of frames of each first effective channel; and take, based on a second threshold and the temperature variance of each first effective channel, the first effective channel with the temperature variance less than the second threshold as the second effective channel;

or

obtain an effective temperature value of each first effective channel based on multi-frame temperature values of each first effective channel; and take the first effective channel with the effective temperature value greater than a fourth threshold and less than a fifth threshold as the second effective channel.

8. An electronic device, comprising a memory, a processor and a computer program stored in the memory and executable on the processor, wherein when executing the computer program, the processor implements the steps of the method according to any one of claims 1 to 6.

9. A computer-readable storage medium which stores a computer program, wherein when executed by a processor, the computer program implements the steps of the method according to any one of claims 1 to 6.

**Patentansprüche**

1. Computergestütztes Verfahren zur Temperaturverarbeitung,
   **dadurch gekennzeichnet, dass** das Verfahren umfasst:

   Erfassen eines aktuellen Rahmentemperaturwerts eines jeden Kanals und einer voreingestellten Anzahl von vorherigen Rahmentemperaturwerten eines jeden Kanals, wobei die Anzahl der Kanäle mindestens zwei beträgt und jeder Kanal einem Temperatursensor entspricht, wobei der jedem Kanal entsprechende Temperatursensor in Echtzeit die Temperatur erfasst, die dem aktuellen Rahmentemperaturwert des entsprechenden Kanals entspricht, oder wobei jeder Kanal einem Filteralgorithmus entspricht und verschiedene Filteralgorithmen einem Temperatursensor entsprechen, der Temperatursensor die Temperatur in Echtzeit sammelt, um ein Temperatursammelsignal zu erhalten, das unter Verwendung der verschiedenen Filteralgorithmen verarbeitet wird, um den aktuellen Rahmentemperaturwert jedes Kanals zu erhalten;
   Berechnen eines Betrags einer Differenz zwischen dem aktuellen Rahmentemperaturwert und dem vorherigen Rahmentemperaturwert jedes Kanals, um eine aktuelle Rahmentemperaturänderung jedes Kanals zu erhalten;
   auf der Grundlage eines ersten Schwellenwerts und der aktuellen Rahmentemperaturänderung jedes Kanals, Wählen des Kanals, dessen aktuelle Rahmentemperaturänderung kleiner als der erste Schwellenwert ist, als ersten effektiven Kanal;
   Bestimmen eines zweiten effektiven Kanals auf der Grundlage von Multirahmentemperaturwerten jedes ersten effektiven Kanals, wobei die Temperaturwerte der letzten voreingestellten Anzahl von Rahmen jedes ersten effektiven Kanals aufgezeichnet werden, die Temperaturwerte der letzten voreingestellten Anzahl von Rahmen die Multirahmentemperaturwerte jedes ersten effektiven Kanals sind und der zweite effektive Kanal eindeutig einem ersten effektiven Kanal entspricht; und
   Ermitteln eines aktuellen Rahmenausgabetemperaturwerts, der ein Temperaturmessergebnis ist, auf der Grundlage des aktuellen Rahmentemperaturwerts jedes zweiten effektiven Kanals , umfassend das Berechnen eines Durchschnittswerts der aktuellen Rahmentemperaturwerte aller zweiten effektiven Kanäle als aktuellen Rahmenausgabetemperaturwert,
   wobei das Bestimmen des zweiten effektiven Kanals auf der Grundlage von Multirahmentemperaturwerten jedes ersten effektiven Kanals umfasst:

Ermitteln einer Temperaturvarianz jedes ersten effektiven Kanals auf der Grundlage einer Varianz der Temperaturwerte einer neuesten voreingestellten Anzahl von Rahmen jedes ersten effektiven Kanals; und auf der Grundlage eines zweiten Schwellenwerts und der Temperaturvarianz jedes ersten effektiven Kanals, Wählen des ersten effektiven Kanals, dessen Temperaturvarianz kleiner als der zweite Schwellenwert ist, als zweiten effektiven Kanal;

oder

Ermitteln eines effektiven Temperaturwerts jedes ersten effektiven Kanals auf der Grundlage von Multirahmentemperaturwerten jedes ersten effektiven Kanals; und Wählen des ersten effektiven Kanals, dessen effektiver Temperaturwert größer als ein vierter Schwellenwert und kleiner als ein fünfter Schwellenwert ist, als zweiten effektiven Kanal.

2. Verfahren nach Anspruch 1, das ferner umfasst:
Zurücksetzen des Kanals, wenn festgestellt wird, dass die aktuelle Rahmentemperaturänderung des Kanals größer oder gleich dem ersten Schwellenwert ist.

3. Verfahren nach Anspruch 1, das ferner umfasst:
Zurücksetzen des ersten effektiven Kanals, wenn festgestellt wird, dass die Temperaturvarianz des ersten effektiven Kanals größer oder gleich dem zweiten Schwellenwert ist.

4. Verfahren nach Anspruch 1, bei dem das Ermitteln eines effektiven Temperaturwerts jedes ersten effektiven Kanals auf der Grundlage von Multirahmentemperaturwerten jedes ersten effektiven Kanals umfasst:

Berechnen eines Absolutwerts einer Differenz zwischen dem aktuellen Rahmentemperaturwert und dem vorherigen Rahmentemperaturwert des ersten effektiven Kanals, um eine Nachbarn-Differenz zu erhalten;
Wählen des aktuellen Rahmentemperaturwerts des ersten effektiven Kanals als effektiven Temperaturwert des ersten effektiven Kanals, wenn festgestellt wird, dass die Nachbarn-Differenz kleiner oder gleich einem sechsten Schwellenwert ist; und
Wählen des vorherigen Rahmentemperaturwerts des ersten effektiven Kanals als effektiven Temperaturwert des ersten effektiven Kanals, wenn festgestellt wird, dass die Nachbarn-Differenz größer als der sechste Schwellenwert ist;

oder

bei dem das Ermitteln eines effektiven Temperaturwerts jedes ersten effektiven Kanals auf der Grundlage von Multirahmentemperaturwerten jedes ersten effektiven Kanals umfasst:

Erfassen von Temperaturwerten von q Rahmen des ersten effektiven Kanals, wobei die Temperaturwerte von q Rahmen den aktuellen Rahmentemperaturwert des ersten effektiven Kanals umfassen, wobei q eine ungerade Zahl größer oder gleich 3 ist; und
Sortieren der Temperaturwerte von q Rahmen in absteigender Reihenfolge und Ermitteln eines Temperaturwerts in der Mitte der Reihenfolge als effektiven Temperaturwert des ersten effektiven Kanals.

5. Verfahren nach einem der Ansprüche 1 bis 4, das ferner umfasst:
Zurücksetzen eines jedem Kanal entsprechenden Temperatursensors, um das Temperatursammeln erneut durchzuführen, wenn festgestellt wird, dass eine Gesamtzahl der dritten effektiven Kanäle kleiner als ein vorgegebener Wert ist;

oder

das ferner umfasst:
wenn der Temperatursensor nach einer ersten voreingestellten Anzahl von Neustarts immer noch neu gestartet werden muss, Auslösen einer Störung des Temperatursensors.

6. Verfahren nach einem der Ansprüche 1 bis 4, bei dem der aktuelle Rahmentemperaturwert jedes Kanals durch einen anderen Temperatursensor ermittelt wird;

vorzugsweise

das ferner umfasst:
wenn ein dem Kanal entsprechender Temperatursensor für eine zweite voreingestellte Anzahl von Malen fortlaufend neu gestartet wird, Auslösen einer Störung des dem Kanal entsprechenden Temperatursensors.

7. Temperaturverarbeitungsvorrichtung, **dadurch gekennzeichnet, dass** die Vorrichtung umfasst:

ein Erfassungsmodul, das konfiguriert ist, um einen aktuellen Rahmentemperaturwert eines jeden Kanals und eine voreingestellte Anzahl von vorherigen Rahmentemperaturwerten eines jeden Kanals zu erfassen, wobei die Anzahl der Kanäle mindestens zwei beträgt und jeder Kanal einem Temperatursensor entspricht, wobei der jedem Kanal entsprechende Temperatursensor die Temperatur in Echtzeit erfasst, die dem aktuellen Rahmentemperaturwert des entsprechenden Kanals entspricht, oder wobei jeder Kanal einem Filteralgorithmus entspricht und verschiedene Filteralgorithmen einem Temperatursensor entsprechen, der Temperatursensor die Temperatur in Echtzeit sammelt, um ein Temperatursammelsignal zu erhalten, das unter Verwendung der verschiedenen Filteralgorithmen verarbeitet wird, um den aktuellen Rahmentemperaturwert jedes Kanals zu erhalten;

ein Berechnungsmodul, das konfiguriert ist, um einen Betrag einer Differenz zwischen dem aktuellen Rahmentemperaturwert und dem vorherigen Rahmentemperaturwert jedes Kanals zu berechnen, um eine aktuelle Rahmentemperaturänderung jedes Kanals zu erhalten;

ein erstes Bestimmungsmodul, das konfiguriert ist, um basierend auf einem ersten Schwellenwert und der aktuellen Rahmentemperaturänderung jedes Kanals den Kanal, dessen aktuelle Rahmentemperaturänderung kleiner als der erste Schwellenwert ist, als ersten effektiven Kanal zu wählen;

ein zweites Bestimmungsmodul, das konfiguriert ist, um einen zweiten effektiven Kanal auf der Grundlage von Multirahmentemperaturwerten jedes ersten effektiven Kanals zu bestimmen, wobei die Temperaturwerte der letzten voreingestellten Anzahl von Rahmen jedes ersten effektiven Kanals aufgezeichnet werden, die Temperaturwerte der letzten voreingestellten Anzahl von Rahmen als die Multirahmentemperaturwerte jedes ersten effektiven Kanals gewählt werden und der zweite effektive Kanal eindeutig einem ersten effektiven Kanal entspricht; und

ein Ermittlungsmodul, das konfiguriert ist, um einen aktuellen Rahmenausgabetemperaturwert, der ein Temperaturmessergebnis ist, auf der Grundlage des aktuellen Rahmentemperaturwerts jedes zweiten effektiven Kanals zu ermitteln, wobei ein Durchschnittswert der aktuellen Rahmentemperaturwerte aller jeweiligen zweiten effektiven Kanäle als aktueller Rahmenausgabetemperaturwert berechnet wird, wobei das zweite Bestimmungsmodul konfiguriert ist, um:

eine Temperaturvarianz jedes ersten effektiven Kanals auf der Grundlage einer Varianz der Temperaturwerte einer letzten voreingestellten Anzahl von Rahmen jedes ersten effektiven Kanals zu ermitteln; und auf der Grundlage eines zweiten Schwellenwerts und der Temperaturvarianz jedes ersten effektiven Kanals den ersten effektiven Kanal, dessen Temperaturvarianz kleiner als der zweite Schwellenwert ist, als zweiten effektiven Kanal zu wählen;
oder
einen effektiven Temperaturwert jedes ersten effektiven Kanals auf der Grundlage von Multirahmentemperaturwerten jedes ersten effektiven Kanals zu ermitteln; und den ersten effektiven Kanal, dessen effektiver Temperaturwert größer als ein vierter Schwellenwert und kleiner als ein fünfter Schwellenwert ist, als zweiten effektiven Kanal zu wählen.

8. Elektronisches Gerät, das einen Speicher, einen Prozessor und ein in dem Speicher gespeichertes und auf dem Prozessor ausführbares Computerprogramm umfasst, wobei der Prozessor bei der Ausführung des Computerprogramms die Schritte des Verfahrens nach einem der Ansprüche 1 bis 6 ausführt.

9. Computerlesbares Speichermedium, das ein Computerprogramm speichert, wobei das Computerprogramm bei der Ausführung durch einen Prozessor die Schritte des Verfahrens nach einem der Ansprüche 1 bis 6 ausführt.

## Revendications

1. Procédé de traitement de température mis en œuvre par ordinateur, **caractérisé en ce que** le procédé comprend les étapes consistant à :

acquérir une valeur de température de trame actuelle de chaque canal et un nombre prédéfini de valeurs de température de trame précédentes de chaque canal, dans lequel le nombre des canaux est d'au moins deux, et chaque canal correspond à un capteur de température, dans lequel le capteur de température correspondant à chaque canal collecte la température en temps réel, qui est la valeur de température de trame actuelle du canal correspondant, ou chaque canal correspond à un algorithme de filtrage et différents algorithmes de filtrage correspondent à un capteur de température, le capteur de température collecte la température en temps réel pour obtenir un signal de collecte de température qui est traité en utilisant les différents algorithmes de filtrage pour obtenir la valeur de température de trame actuelle de chaque canal ;

calculer une valeur absolue d'une différence entre la valeur de température de trame actuelle et la valeur de température de trame précédente de chaque canal pour obtenir une variation de température de trame actuelle de chaque canal ;

prendre, sur la base d'un premier seuil et de la variation de température de trame actuelle de chaque canal, le canal avec la variation de température de trame actuelle inférieure au premier seuil comme premier canal effectif ;

déterminer un second canal effectif sur la base de valeurs de température de trames multiples de chaque premier canal effectif, dans lequel les valeurs de température du dernier nombre prédéfini de trames de chaque premier canal effectif sont enregistrées, les valeurs de température du dernier nombre prédéfini de trames sont les valeurs de température de trames multiples de chaque premier canal effectif, et le second canal effectif correspond de manière unique à un premier canal effectif ; et

obtenir une valeur de température de sortie de trame actuelle qui est un résultat de mesure de température sur la base de la valeur de température de trame actuelle de chaque deuxième canal effectif, comprenant :

 calculer une valeur moyenne des valeurs de température de trame actuelle de tous les seconds canaux effectifs en tant que valeur de température de sortie de trame actuelle,

 dans lequel la détermination du second canal effectif sur la base de valeurs de température de trames multiples de chaque premier canal effectif comprend :

  obtenir une variance de température de chaque premier canal effectif sur la base d'une variance de valeurs de température d'un dernier nombre prédéfini de trames de chaque premier canal effectif ; et prendre, sur la base d'un deuxième seuil et de la variance de température de chaque premier canal effectif, le premier canal effectif avec la variance de température inférieure au deuxième seuil comme second canal effectif ;

  ou

  obtenir une valeur de température effective de chaque premier canal effectif sur la base de valeurs de température de trames multiples de chaque premier canal effectif ; et prendre le premier canal effectif avec la valeur de température effective supérieure à un deuxième seuil et inférieure à un cinquième seuil comme second canal effectif.

2. Procédé selon la revendication 1,
comprenant en outre les étapes consistant à :
réinitialiser le canal lors de la détermination que la variation de température de trame actuelle du canal est supérieure ou égale au premier seuil.

3. Procédé selon la revendication 1,
comprenant en outre les étapes consistant à :
réinitialiser le premier canal effectif lors de la détermination que la variance de température du premier canal effectif est supérieure ou égale au deuxième seuil.

4. Procédé selon la revendication 1, dans lequel l'obtention d'une valeur de température effective de chaque premier canal effectif sur la base de valeurs de température de trames multiples de chaque premier canal effectif comprend les étapes consistant à :

 calculer une valeur absolue d'une différence entre la valeur de température de trame actuelle et la valeur de température de trame précédente du premier canal effectif pour obtenir une différence voisine ;

 prendre la valeur de température de trame actuelle du premier canal effectif comme valeur de température effective du premier canal effectif lors de la détermination que la différence voisine est inférieure ou égale à un sixième seuil ; et

 prendre la valeur de température de trame précédente du premier canal effectif comme valeur de température effective du premier canal effectif lors de la détermination que la différence voisine est supérieure au sixième seuil ;

 ou

 dans lequel l'obtention d'une valeur de température effective de chaque premier canal effectif sur la base de valeurs de température de trames multiples de chaque premier canal effectif comprend les étapes consistant à :

  acquérir des valeurs de température de q trames du premier canal effectif, les valeurs de température de q trames comprenant la valeur de température de trame actuelle du premier canal effectif, où q est un nombre impair supérieur ou égal à 3 ; et
trier les valeurs de température de q trames dans un ordre décroissant, et obtenir une valeur de température au milieu de l'ordre comme valeur de température effective du premier canal effectif.

5. Procédé selon l'une quelconque des revendications 1 à 4, comprenant en outre l'étape consistant à:

réinitialiser un capteur de température correspondant à chaque canal pour effectuer à nouveau une collecte de température, lors de la détermination qu'un nombre total des troisièmes canaux effectifs est inférieur à une valeur de consigne ;
ou
comprenant en outre l'étape consistant à :
lorsque le capteur de température doit encore être redémarré après avoir été redémarré en continu pendant un premier nombre prédéfini de fois, promouvoir une défaillance du capteur de température.

6. Procédé selon l'une quelconque des revendications 1 à 4, dans lequel la valeur de température de trame actuelle de chaque canal est obtenue par un capteur de température différent ;

de préférence dans lequel
comprenant en outre l'étape consistant à :
lorsqu'un capteur de température correspondant au canal est redémarré en continu pour un second nombre prédéfini de fois, promouvoir une défaillance du capteur de température correspondant au canal.

7. Appareil de traitement thermique, **caractérisé en ce que** l'appareil comprend :

un module d'acquisition configuré pour acquérir une valeur de température de trame actuelle de chaque canal et un nombre prédéfini de valeurs de température de trame précédente de chaque canal, dans lequel le nombre de canaux est d'au moins deux, et chaque canal correspond à un capteur de température, dans lequel le capteur de température correspondant à chaque canal collecte la température en temps réel, qui est la valeur de température de trame actuelle du canal correspondant, ou chaque canal correspond à un algorithme de filtrage et différents algorithmes de filtrage correspondent à un capteur de température, le capteur de température collecte la température en temps réel pour obtenir un signal de collecte de température qui est traité en utilisant les différents algorithmes de filtrage afin d'obtenir la valeur de température de trame actuelle de chaque canal ;
un module de calcul configuré pour calculer une valeur absolue d'une différence entre la valeur de température de trame actuelle et la valeur de température de trame précédente de chaque canal pour obtenir une variation de température de trame actuelle de chaque canal ;
un premier module de détermination configuré pour prendre, sur la base d'un premier seuil et de la variation de température de trame actuelle de chaque canal, le canal avec la variation de température de trame actuelle inférieure au premier seuil comme premier canal effectif ;
un deuxième module de détermination configuré pour déterminer un second canal effectif sur la base de valeurs de température de trames multiples de chaque premier canal effectif, dans lequel les valeurs de température du dernier nombre prédéfini de trames de chaque premier canal effectif sont enregistrées, les valeurs de température du dernier nombre prédéfini de trames sont prises comme les valeurs de température de trames multiples de chaque premier canal effectif, et le second canal effectif correspond uniquement à un premier canal effectif ; et
un module d'obtention configuré pour obtenir une valeur de température de sortie de trame actuelle qui est un résultat de mesure de température sur la base de la valeur de température de trame actuelle de chaque second canal effectif, comprenant le calcul d'une valeur moyenne des valeurs de température de trame actuelle de tous les seconds canaux effectifs respectifs en tant que valeur de température de sortie de trame actuelle
dans lequel le second module de détermination est configuré pour :

obtenir une variance de température de chaque premier canal effectif sur la base d'une variance de valeurs de température d'un dernier nombre prédéfini de trames de chaque premier canal effectif ; et prendre, sur la base d'un deuxième seuil et de la variance de température de chaque premier canal effectif, le premier canal effectif avec la variance de température inférieure au deuxième seuil comme second canal effectif ;
ou
obtenir une valeur de température effective de chaque premier canal effectif sur la base de valeurs de température de trames multiples de chaque premier canal effectif ; et prendre le premier canal effectif avec la valeur de température effective supérieure à un quatrième seuil et inférieure à un cinquième seuil comme second canal effectif.

8. Dispositif électronique, comprenant une mémoire, un processeur et un programme informatique stocké dans la mémoire et exécutable sur le processeur, dans lequel lors de l'exécution du programme informatique, le processeur met en œuvre les étapes du procédé selon l'une quelconque des revendications 1 à 6.

9. Support de stockage lisible par ordinateur qui stocke un programme informatique, dans lequel, lorsqu'il est exécuté par un processeur, le programme informatique met en œuvre les étapes du procédé selon l'une quelconque des revendications 1 à 6.

Acquiring a current frame temperature value of each channel ⟶ S101

Calculating an absolute value of a difference between the current frame temperature value and a previous frame temperature value of each channel to obtain a current frame temperature variation of each channel ⟶ S102

Determining each first effective channel based on a first threshold and the current frame temperature variation of each channel ⟶ S103

Determining each second effective channel based on multi-frame temperature values of each first effective channel ⟶ S104

Obtaining a current frame output temperature value based on the current frame temperature value of each second effective channel ⟶ S105

FIG. 1

Determining each third effective channel based on the current frame temperature value of each second effective channel ⟶ S201

Obtaining the current frame output temperature value based on the current frame temperature value of each third effective channel ⟶ S202

FIG. 2

Calculating an absolute value of a difference between the current frame temperature value of the second effective channel and the current frame temperature value of each of the remaining second effective channels to obtain comparison values corresponding to the second effective channel ⟶ S301

Taking the second effective channel as the third effective channel, when determining that the number of comparison values less than a third threshold among the comparison values corresponding to the second effective channel is greater than a preset value ⟶ S302

FIG. 3

Obtaining a temperature variance of each first effective channel based on a variance of temperature values of a latest preset number of frames of the first effective channel ⟶ S401

Determining each second effective channel based on a second threshold and the temperature variance of each first effective channel ⟶ S402

FIG. 4

Obtaining an effective temperature value of each first effective channel based on multi-frame temperature values of each first effective channel ⟶ S501

Taking the first effective channel as the second effective channel, when determining that the effective temperature value of the first effective channel is greater than a fourth threshold and less than a fifth threshold ⟶ S502

FIG. 5

1. Acquiring a current frame temperature value of each channel

2. Calculating a current frame temperature variation of each channel

3. Judging whether each channel is a first effective channel

NO

4. Restarting a temperature sensor corresponding to the channel

5. Calculating a temperature variance of each first effective channel

6. Judging whether each first effective channel is a second effective channel

NO

YES

7. Restarting a temperature sensor corresponding to the first effective channel

8. Calculating comparison values corresponding to each second effective channel

9. Judging whether each second effective channel is a third effective channel

NO

YES

10. Restarting a temperature sensor corresponding to the second effective channel

11. Obtaining a current frame output temperature value

FIG. 6

1. Acquiring a current frame temperature value of each channel

2. Calculating a current frame temperature variation of each channel

3. Judging whether each channel is a first effective channel

NO

4. Resetting a filtering algorithm corresponding to the channel

5. Calculating a temperature variance of each first effective channel

6. Judging whether each first effective channel is a second effective channel

NO

7. Resetting a filtering algorithm corresponding to the first effective channel

YES

8. Calculating comparison values corresponding to each second effective channel

9. Judging whether each second effective channel is a third effective channel

NO

10. Resetting a filtering algorithm corresponding to the second effective channel

YES

11. Obtaining a current frame output temperature value

FIG. 7

Temperature Processing Apparatus

801       802       803       804       805

| Acquisition Module | Calculation Module | First Determination Module | Second Determination Module | Obtainment Module |

FIG. 8

Temperature Processing Apparatus

801    802    803    804    805    806

| Acquisition Module | Calculation Module | First Determination Module | Second Determination Module | Obtainment Module | First Reset Module |

FIG. 9

805

Obtainment Module

8051       8052

| First Determination Unit | First Obtainment Unit |

FIG. 10

8051

First Determination Unit

80511                              80512

| Calculation Subunit | Judgement Subunit |

FIG. 11

Temperature Processing Apparatus

801          802          803          804          805          808

| Acquisition Module | Calculation Module | First Determination Module | Second Determination Module | Obtainment Module | Third Reset Module |

FIG. 12

804

Second Determination Module

8041                              8042

| Second Obtainment Unit | Second Determination Unit |

FIG. 13

Temperature Processing Apparatus

801     802     803     804     805     807

| Acquisition Module | Calculation Module | First Determination Module | Second Determination Module | Obtainment Module | Second Reset Module |

FIG. 14

804

Second Determination Module

8043         8044

| Third Obtainment Unit | Judgement Unit |

FIG. 15

Electronic Device

1601        1603

Processor        Memory

Communication Bus

1604

Communication Interface   1602

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109186813 A